(19) Europäisches Patentamt
European Patent Office
Office européen des brevets

(11) **EP 2 506 559 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(51) Int Cl.:
*H04N 1/60* (2006.01)     *B41F 33/00* (2006.01)

(21) Anmeldenummer: **12158163.1**

(22) Anmeldetag: **06.03.2012**

(54) **Verfahren zur Graubalancekorrektur eines Druckprozesses**

Method for grey balance adjustment of a print process

Procédé de correction de la balance des gris d'un processus d'impression

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2011 DE 102011015306**

(43) Veröffentlichungstag der Anmeldung:
**03.10.2012 Patentblatt 2012/40**

(73) Patentinhaber: **Heidelberger Druckmaschinen AG 69115 Heidelberg (DE)**

(72) Erfinder: **Bestmann, Dr., Günther 24161 Altenholz (DE)**

(56) Entgegenhaltungen:
**DE-A1-102008 031 735     US-A- 5 774 146
US-A1- 2006 197 966     US-A1- 2010 110 461**

• **BALASUBRAMANIAN R: "OPTIMIZATION OF THE SPECTRAL NEUGEBAUER MODEL FOR PRINTER CHARACTERIZATION", JOURNAL OF ELECTRONIC IMAGING, SPIE / IS & T, Bd. 8, Nr. 2, 1. April 1999 (1999-04-01), Seiten 156-166, XP000825806, ISSN: 1017-9909, DOI: 10.1117/1.482694**

EP 2 506 559 B1

**Beschreibung**

Die vorliegende Erfindung betrifft ein Verfahren zur Graubalancekorrektur eines Druckprozesses, der im Folgenden auch als Zieldruckprozess bezeichnet wird. Hierfür werden in einem Referenzdruckprozess erste Farbwerte auf oder im Umfeld der Grauachse des Farbraums des Referenzdruckprozesses ermittelt. Diese ersten Farbwerte werden dann weiter zur Ermittlung von Tonwerten des Zieldruckprozesses verwendet, wobei diese Tonwerte eine korrigierte Graubalance des Zieldruckprozesses beschreiben.

Die Graubalance ist definiert als ein Satz von Tonwerten für bunte Prozessfarben, wie z. B. Cyan, Magenta und Gelb (CMY), für den der Druck unter festgelegten Betrachtungsbedingungen eine unbunte Farbe ergibt. Die vorgegebenen Druckbedingungen hierfür sind dabei z. B. in Prozessstandards, wie dem Prozessstandard Offsetdruck oder dem MedienStandard Druck des BVDM (Bundesverbandes Druck und Medien) festgelegt. Diese basieren wiederum auf Vorgaben der entsprechenden ISO-Standards wie z.B. ISO 12647-2:2004. Die Betrachtungsbedingungen sind ebenfalls von der ISO standardisiert.

Als Druckverfahren kommt der Offsetdruck, der Tiefdruck oder weitere in Betracht. Auch sind digitale Druckverfahren, wie z. B. Elektrophotographie oder andere "Non-Impact-Printing"-Verfahren möglich. Diese Aufzählung soll nicht abschließend gelten sondern nur Beispiele aufzeigen.

Für diese Druckverfahren werden in der Reproduktionstechnik Druckvorlagen für Druckseiten erzeugt, die alle zu druckenden Elemente wie Texte, Graphiken und Bilder, enthalten. Im Fall der elektronischen Herstellung der Druckvorlagen liegen diese Elemente in Form von digitalen Daten vor. Für ein Bild werden die Daten z. B. erzeugt, indem das Bild in einem Scanner punkt- und zeilenweise abgetastet wird, jeder Bildpunkt in Farbkomponenten zerlegt wird und die Farbkomponenten digitalisiert werden. Üblicherweise werden Bilder in einem Scanner in die Farbkomponenten Rot, Grün und Blau (RGB) zerlegt, also in die Komponenten eines dreidimensionalen Farbraums. Für einen farbigen Druck werden jedoch andere Farbkomponenten benötigt. Hierbei können allgemein verschiedene bunte Druckfarben und Schwarz verwendet werden, um ein entsprechendes farbiges Druckbild auf einem Bedruckstoff zu erzeugen. Beim Vierfarbdruck sind das die Druckfarben Cyan, Magenta, Gelb und Schwarz (CMYK), also die Komponenten eines vierdimensionalen Farbraums. Dafür werden die Bilddaten vom RGB-Farbraum des Scanners in den CMYK-Farbraum des zu verwendenden Druckprozesses transformiert.

Bei dieser Transformation wird jedem Farbwert eine Kombination der Prozessfarben, d. h. der Druckfarben des Ausgabefarbraumes, zugeordnet. Jeder Prozessfarbe wird dabei eine eigene Druckvorlage, ein sogenannter Farbauszug, zugeordnet. Auf Grundlage der Farbauszüge werden für den anschließenden Druckprozess Druckformen ersten. Für den Offsetdruck sind das Druckplatten.

Zur Erzeugung der Druckplatten können zunächst Filme belichtet werden und dann mittels dieser Filme die Druckplatten bebildert werden. In heutigen digitalen Bebilderungsverfahren werden die den einzelnen Farbauszügen zugeordneten Druckplatten erzeugt, indem diese in einem Plattenbelichter belichtet werden. Hierfür wird mittels eines sogenannten Raster-Image-Prozessors (RIP) zunächst eine digitale gerasterte Bitmap erzeugt, welche angibt, welche Punkte auf der Druckplatte belichtet werden sollen und welche nicht. Jedem zu erzeugenden Farbwert wird durch den RIP ein Tonwert des entsprechenden Farbauszuges zugeordnet. Z. B. können die vorgegebenen Farbwerte durch die Farbkomponenten CMYK mit 8 Bit digitalisiert dargestellt werden. D. h. jeder Farbkomponente der Prozessfarben werden dabei 256 Tonwertestufen zugeordnet. Der Tonwert eines Rasterpunktes wird dabei durch die Anzahl der in der dem Rasterpunkt zugeordneten Rasterzelle bebilderten Belichterpixel, bestimmt. Eine Rasterzelle umfasst dabei z. B. 256 mögliche Einzelpixel. Je nachdem, wie viele dieser Pixel auf einer Druckplatte in einer Rasterzelle belichtet werden, ergibt sich ein Tonwert von 0 bis 100 % für diesen Rasterpunkt.

Zur Erzeugung bestimmter Tonwerte mittels der unterschiedlichen Farbauszüge sind in einem Farbprofil die Tonwertekombinationen der Prozessfarben hinterlegt, die den vorgegebenen Farbwerten entsprechen. Statt Farbprofil wird im Folgenden auch der Begriff Profil verwendet. Um die Größe eines entsprechenden Tabellenspeichers zu reduzieren, werden nicht alle möglichen Kombinationen der Farbkomponenten CMYK abgespeichert, sondern nur die Wertekombinationen für ein gröberes regelmäßiges Gitter von Schnittstellen im CMYK-Farbraum. Für CMYK-Wertekombinationen, die zwischen den Gitterpunkten liegen, bzw. für entsprechende Farbwerte eines geräteunabhängigen Farbraums, wie z. B. dem CIELab-Farbraum werden die gesuchten Tonwertekombinationen bzw. Farbwerte aus den benachbarten Schnittstellen interpoliert.

Da es mehrere Farbwertekombinationen CMYK gibt, die einem einzelnen Farbwert des geräteunabhängigen Farbraums entsprechen, gibt es auch unterschiedliche Möglichkeiten, ein entsprechendes Profil für die Zuordnung zu hinterlegen, um eine eindeutige Zuordnung von Farbwerten und Tonwertekombinationen zu erhalten.

Auf der anderen Seite ist es nicht nur ein Bedürfnis, die Farbwerte auf bestimmte Weise durch Tonwertkombinationen der Prozessfarben in einem Druckverfahren zu erzeugen, sondern es stellt sich auch das Problem, dass in Abhängigkeit der verwendeten Bedruckstoffe, insbesondere deren Färbung, Gerätschaften, Farben und andere Randbedingungen die tatsächlich im Druckverfahren erzeugten Tonwerte auf dem Bedruckstoff von den vorgegebenen Sollwerten abweichen. Aus der DE 102 26 563 A1 ist daher ein Verfahren bekannt, um vor der Produktion von Druckplatten Testdruckformen zu erzeugen, welche Testformen aufweisen, die bestimmten Solltonwerten zugeordnet sind und durch unterschiedliche Tonwertkombinationen gebildet werden. Aufgrund der Belichtung entsprechender Testdruckformen und der Verwendung in einem bestimmten Druckverfahren kann durch das Ausmessen der auf dem Bedruckstoff erzeugten Testformen ein Zusammenhang zwischen den erzeugten Ist-Tonwerten und den vorgegebenen Soll-Tonwerten hergestellt werden und die Zuordnung der Tonwerte der Prozessfarben zu den Soll-Tonwerten entsprechend einer Tonwert-Kennlinie für die Bebilderung von Druckformen für dieses Druckverfahren in einer Prozesskalibrierung korrigiert abgespeichert bzw. hinterlegt werden.

Bei dem vorgegebenen Farbprofil sind die Tonwertzunahmen gemäß der Prozesskalibrierung für eine vorgegebene Druckbedingung, d.h. für einen Druckprozess berücksichtigt. Die Druckbedingung enthält dabei die Information über die verwendeten Druckfarben und die verwendeten Papiere des beschriebenen Druckprozesses. So können beispielsweise Charakterisierungsdaten gemäß FOGRA39 für die Druckbedingung: Offset Papiertyp 1 + 2 glänzend und matt gestrichenes Papier mit Tonwertzunahmekurven A (CMY) und B (K) bereitgestellt sein. Hierzu ist ein entsprechendes Farbprofil gegeben, welches den Tonwertzunahmen für den entsprechenden Papiertyp und die entsprechenden Druckfarben im Offsetdruck Rechnung trägt.

Des Weiteren ist es möglich, Schwankungen und Abweichungen in einem Druckverfahren durch Voreinstellungen bzw. Nachregelungen von Farbzonenschrauben zu regeln. Mit diesen kann die Schichtdicke einer Prozessfarbe in Grenzen manuell variiert werden, um so noch während des Druckverfahrens ohne eine Neubebilderung von Druckplatten eine Anpassung der Ist-Tonwerte an die gewünschten Soll-Tonwerte zu erreichen.

Ist nun eine entsprechende Tonwert-Kennlinie für die Bebilderung einer Druckform hinterlegt und eine Zuordnung von Soll-Tonwerten zu bestimmten Tonwertkombinationen gemäß eines Druckprozesses vorhanden, so werden die Druckplatten gemäß den einzelnen Farbauszügen bebildert und in eine Druckmaschine eingesetzt.

Um die Farbgebung und das Register zu überprüfen, sind die verwendeten Druckplatten in Randbereichen oder zwischen einzelnen Seiten mit weiteren Testformen bebildert bzw. sind entsprechende Prozesskontrollstreifen mit unterschiedlichen Farbfeldern vorgesehen. Aus der EP 1 279 502 B1 ist z. B. ein Graubalancefeld vorgesehen, bei welchem einem gerasterten Feld der Farbe Schwarz (K) mit einer Deckung von 40 % ein Bunttonfeld der übrigen Druckfarben (CMY) direkt zugeordnet wird, welches gemäß eines Farbprofils den gleichen Graufarbwert wie das 40 % K-Feld aufweisen soll. Sind Abweichungen der Graufarbwerte des Buntgraufelds und des Schwarzfeldes dieses Graubalancefeldes visuell zu erkennen, so wird zur genaueren Überprüfung eine densitometrische Vermessung weiterer Volltonfelder vorgeschlagen.

Weiter kann solch ein Graubalancefeld auch farbmetrisch vermessen werden. Wird hier festgestellt, dass die Ist-Farbwerte den Soll-Farbwerten nicht entsprechen, so werden die Farbzonenschrauben nachgeregelt und die Schichtdicke der entsprechenden Prozessfarbe wird erhöht bzw. verringert. Hierdurch ändern sich allerdings sowohl die Volltonfärbungen der entsprechenden Prozessfarbe als auch die entsprechenden Tonwertzunahmen und damit insgesamt das Zusammendruckverhalten. Über diese Änderung der Schichtdicke kann nur in Grenzen ein gewünschter Effekt erzielt werden, um die Istwerte den Sollwerten anzugleichen, da sich global alle Farbwerte ändern. So kann es beispielsweise wünschenswert sein, gerade die Graubalance in einem Tonwertbereich zu korrigieren, aber unerwünschter weise wird dadurch auch in einem anderen Tonwertebereich ein neuer Farbstich erzeugt.

Z. B. kann es vorkommen, um einem roten Farbstich im Vierteltonbereich entgegenzusteuern, entweder die Schichtdicke von Cyan zu erhöhen oder die von Gelb und Magenta zu erniedrigen. Dadurch erhöhen oder erniedrigen sich die Färbungen und Tonwertzunahmen der beteiligten Prozessfarben. Der Fehler der Grauwiedergabe im Vierteltonbereich wird durch diese Maßnahme korrigiert, es kann aber zu einer Verschiebung der Grauwiedergabe im Dreiviertelton kommen. Gleichzeitig erhöht sich der Fehler der Färbungswerte und der Tonwertzunahme.

Durch diese Korrektur per Schichtdickenvariation sind also Kompromisse durch die Erzeugung anderer Fehler bzw. Verfärbungen zu tolerieren. Zum anderen müssen diese Korrekturen bei jedem Druckvorgang erneut durchgeführt werden.

Gerade, wenn in einer Druckerei andere Papiere und / oder andere Druckfarben verwendet werden als sie für die Erzeugung der Kallibrierkennlinie vorlagen, so ergeben sich trotz korrekt eingestellter Färbung und korrekt kalibrierter Tonwertzunahme Unterschiede in der Grauwiedergabe. Diese lassen sich zwar durch die beschriebene Schichtdickenvariation ausgleichen, es kommt allerdings zu anderen ungewünschten Fehlern und außerdem zu einer regelmäßig auftretenden Makulatur im Andruck.

Ein weiteres Korrekturverfahren für die Graubalance ist in der DE 10 2008 031 735 A1 vorgeschlagen. Hier werden Buntgraufelder in einem Prozesskontrollstreifen gedruckt. Ein erstes Buntgraufeld enthält eine Tonwertkombination der bunten Druckfarben, welche gemäß vorgegebenen Bedingungen einem bestimmten Grauwert entspricht. Andere Buntgraufelder sind benachbart angeordnet, bei denen die Tonwertkombination im Wesentlichen der des ersten Buntgraufeldes entspricht, wobei eine einzelne bunte Druckfarbe jeweils leicht variiert wird. Durch farbmetrisches Ausmessen der einzelnen Buntgraufelder kann dann dasjenige Buntgraufeld ermittelt werden, welches am dichtesten an der Grauachse eines geräteunabhängigen Farbraumes liegt. Auf diese Weise werden wenigstens Tonwertekombinationen einiger der bunten Druckfarben ermittelt, welche einen möglichst grauen Wert im Farbraum ergeben. Allerdings wird der Helligkeitsunterschied zwischen einem gewünschten Grauwert und dem tatsächlich gedruckten Grauwert nicht mit berücksichtigt.

Besonders problematisch bei dem beschriebenen Verfahren ist es, wenn im tatsächlichen Druck Papiere verwendet werden, welche zwar nominell den Papieren aus der vorgegebenen Druckbedingung des Farbprofils entsprechen aber dennoch unterschiedliche Farbtöne aufweisen. Gleiches gilt für die verwendete Druckfarbe Schwarz, welche im Allgemeinen auch einen Farbstich aufweist. Ein entsprechendes farbmetrisches Ausmessen der Buntgraufelder berücksichtigt daher zum Einen nicht das visuelle Empfinden eines entsprechenden Schwarzfeldes auf dem gleichen Bedruckstoff und auch nicht einen möglichen Helligkeitsunterschied zwischen einem schwarzen Kontrollfeld und einem Buntgraufeld mit gleichem Soll-Grauwert.

In US 2010/0110461 A1 wird ein Verfahren beschrieben um die Farbunterschiede im Drucksubstrat zwischen einem Prüfdruck und dem eigentlichen Zieldruck auszugleichen.

Im "Journal of Electronic Imaging 8 (2) vom April 1999 auf den Seiten 156 bis 166 wird im Artikel "Optimization of the spectral Neugebauer model for printer characterization" eine Verbesserung des Neugebauer-Models vorgestellt.

Durch US 2006/0197966 A1 ist eine Methode zur Kalibrierung eines Netzwerks von Druckern bekannt, in welchem einer dieser Drucker als Referenz bzgl. der Farbwerte für die anderen Drucker im Netzwerk dient.

Es ist somit die Aufgabe der vorliegenden Erfindung, ein Korrekturverfahren aufzuzeigen, mit dem die regelmäßig auftretende Makulatur verringert werden kann und das Auftreten von nicht gewünschten Färbungsschwankungen vermieden werden kann.

Die Aufgabe der Erfindung wird durch den Gegenstand der unabhängigen Ansprüche 1, 5, 7 und 8 gelöst.

Durch erste Farbwerte eines Referenzdruckprozesses wird eine Graubalance vorgegeben. Hierfür liegen diese ersten Farbwerte entweder auf der Grauachse des Farbraums des Referenzdruckprozesses selber oder zumindest in deren Umfeld. Die Farbwerte können alternativ auch durch die Vorgabe von ersten Tonwerten der bunten Prozessfarben des Referenzdruckprozesses definiert werden. Hierfür werden Tonwertkombinationen der bunten Druckfarben, z. B. CMY, vorgegeben, welche näherungsweise ein gedrucktes Grau ergeben. Dieses können beispielsweise die Graustufen CMY = 25/19/19%, 50/40/40% und 75/66/66% sein. Erste Farbwerte, welche diesen vorgegebenen ersten Tonwerten des Referenzdruckprozesses zugeordnet sind, beschreiben dann einen Farbverlauf zumindest in der Nähe der Grauachse. Die ersten Farbwerte, welche zu den ersten Tonwerten gehören, können dabei gemäß eines Farbprofils des Referenzdruckprozesses oder über Charakterisierungsdaten des Referenzdruckprozesses selber ermittelt werden. Die Farbwerte können dabei als Lab-Farbwerte angegeben werden.

In einer Weiterentwicklung der Erfindung können diese ersten Farbwerte jeweils an Farborten ermittelt werden, welche einen vorgegebenen Abstand in Richtung der Helligkeitsachse des Farbraums zueinander aufweisen. Bei rein weißen Farbwerten mit $L=L_{Papier}$, die das Papierweiß beschreiben und bei rein schwarzen Farbwerten mit $L=0$ kann in jedem Druckprozess die Graubalance fest vorgegeben werden. Eine Korrektur ist hierfür nicht notwendig. Die ersten Farbwerte des Referenzdruckprozesses können daher vorteilhafterweise innerhalb eines Intervalls der Helligkeitsachse des Farbraums gewählt werden, welche eine untere und obere Schranke im Bereich des reinen Schwarz ($L=0$) und des Papierweiß ($L=L_{Papier}$) aufweist. Im Allgemeinen reichen drei erste Farbwerte zur Vorgabe einer Graubalance des Referenzdruckprozesses aus. Diese können beispielsweise äquidistant entlang der Helligkeitsachse des Farbraums verteilt sein.

Diese durch einen Referenzdruckprozess vorgegebene Graubalance wird verwendet, um einen Zieldruckprozess in Bezug auf seine Graubalance zu korrigieren, d. h. den Zieldruckprozess in Bezug auf die Graubalance zu kalibrieren. Hierfür werden bunte Tonwerte des Zieldruckprozesses ermittelt, welche die korrigierte Graubalance des Zieldruckprozesses wenigstens beschreiben. Die ersten Farbwerte werden zur Ermittlung der bunten Tonwerte des Zieldruckprozesses wenigstens herangezogen. Unter bunten Tonwerten sind die Tonwerte der bunten Prozessfarben des Zieldruckprozesses gemeint, welche im Übereinanderdruck einen grauen, d. h. unbunten Farbton ergeben sollen.

Zur Ermittlung der bunten Tonwerte des Zieldruckprozesses werden zunächst zweite Farbwerte des Zieldruckprozesses aus den ersten Farbwerten des Referenzdruckprozesses abgeleitet. Die so abgeleiteten zweiten Farbwerte geben zumindest die korrigierte Graubalance des Zieldruckprozesses vor.

Um aus den zweiten Farbwerten die entsprechenden Tonwerte des Zieldruckprozesses zu ermitteln, werden zunächst erste Charakterisierungsdaten des Zieldruckprozesses bestimmt. Aus diesen so bestimmten ersten Charakterisierungsdaten und den zweiten Farbwerten des Zieldruckverfahrens können die Tonwerte des Zieldruckverfahrens bestimmt werden. Diese Tonwerte sind dann den zweiten Farbwerten des Zieldruckprozesses zugeordnet und ergeben eine korrigierte Graubalance.

Die Ermittlung der Tonwerte des Zieldruckverfahrens aus den zweiten Farbwerten kann dabei insbesondere iterativ erfolgen, indem z. B. zunächst jeweils eine Tonwertekombination der bunten Prozessfarben des Zieldruckprozesses vorgegeben wird. Mittels der Charakterisierungsdaten des Zieldruckprozesses können diesen Tonwertekombinationen dann Farbwerte zugeordnet werden und durch iteratives Ändern der einzelnen Tonwerte der bunten Druckfarben nacheinander kann eine Tonwertekombination bestimmt werden, welche den ermittelten zweiten Farbwerten des Zieldruckverfahrens entspricht.

Auf diese Weise können Tonwerte-/Farbwertkombinationen des Zieldruckprozesses bestimmt werden, welche korrigierten Charakterisierungsdaten zugeordnet werden können. Solcher Art korrigierte Charakterisierungsdaten umfassen dann eine korrigierte Graubalance des Zieldruckprozesses.

Alternativ oder zusätzlich hierzu kann auch eine Korrekturfunktion erstellt werden, die basierend auf den zweiten Farbwerten und den dazu bestimmten Tonwerten eine korrigierte Zuordnung von Farb-zu Tonwerten des Zieldruckprozesses entsprechend der korrigierten Graubalance beschreibt. Bei dieser Korrekturfunktion kann es sich insbesondere um eine tabellarische Zuordnung, z. B. mittels lookup tables, handeln. Genaue Werte können dann iterativ bestimmt werden.

Ausgehend von dieser korrigierten Graubalance kann alternativ oder zusätzlich auch ein Profil des Zieldruckprozesses angepasst oder erstellt werden, welches einen Tonwerteverlauf gemäß der korrigierten Graubalance umfasst. Eine Anpassung kann auch das Umrechnen von einzelnen Tonwerten bzw. Tonwert- / Farbwertzuordnungen direkt bei der Erzeugung von Druckformen oder beim Rippen umfassen.

Basierend auf der Korrekturfunktion, den korrigierten Charakterisierungsdaten oder dem angepassten oder erstellten Profil des Zieldruckprozesses wird wenigstens eine Druckform erzeugt und auf Grundlage dieser Druckform ein Bedruckstoff bebildert. Die ersten Charakterisierungsdaten des Zieldruckprozesses können gleichzeitig für die Kalibrierung des Zieldruckprozesses selber verwendet werden. Auf diese Weise kann in einem Verfahrensschritt eine Kalibrierung des Druckbildes des Zieldruckprozesses und eine Graubalanceanpassung erfolgen, ohne dass nach der Erzeugung der ersten Charakterisierungsdaten weitere Testformen bebildert und ausgewertet werden müssen.

In einer Weiterbildung der Erfindung ist es vorgesehen, dass gemäß dem Zieldruckprozess wenigstens ein Testelement mit Messfeldern auf einen Bedruckstoff gedruckt wird. Die Messfelder des wenigstens einen Testelementes werden mittels eines Photospektrometers ausgemessen, so dass spektrale Ist-Daten erfasst werden. Die ersten Charakterisierungsdaten sollen dann erfindungsgemäß auf Grundlage der spektralen Ist-Daten ermittelt werden. Zur Platzeinsparung auf dem Bedruckstoff ist es vorteilhafter Weise vorgesehen, dass weniger Messfelder im Testelement gedruckt werden, als erste Charakterisierungsdaten ermittelt werden sollen. Die restlichen ersten Charakterisierungsdaten sollen dann aus den spektralen Ist-Daten berechnet werden. Auf diese Weise bleibt auf dem Bedruckstoff bzw. den diesem zugrunde liegenden Druckformen ausreichend Platz, um weitere Testelemente, Testfelder oder Testbilder unterzubringen und die Qualität des Druckverfahrens schnell auf einfache Weise weiter zu verbessern.

Um das Testelement möglichst klein zu halten, d. h. um möglichst wenig Messfelder bereitzustellen, ist in einer erfindungsgemäßen Weiterbildung vorgesehen, dass ein Modell zur Berechnung von Farbwerten eines Druckprozesses verwendet wird, um die ersten Charakterisierungsdaten aus den spektralen Ist-Daten der Messfelder zu berechnen. Das Modell ist dabei so ausgeführt, dass wenigstens ein Parameter des Modells aus den spektralen Ist-Daten errechnet wird, welcher die Zuordnung der Tonwerte zu den Farbwerten der ersten Charakterisierungsdaten möglichst gut beschreibt.

Dieses erfindungsgemäße Testfeld kann dabei sowohl in einem Testdruck mit einer Testform erzeugt werden als auch allgemein in einem nicht zu verwendenden Bereich der Druckvorlage und der Druckform abgebildet werden.

Auf Basis einer ersten Teilmenge dieser abgespeicherten Ist-Daten kann dann eine erste Tonwertzunahme für die zugeordneten Tonwerte der Farbfelder der ersten Teilmenge bestimmt werden. Alternativ oder zusätzlich kann auch eine Tonwertekurve für diese erste Teilmenge bestimmt werden .

Da diese Tonwertzunahme zunächst einmal für einzelne, bestimmte Tonwerte ermittelt ist, ist es weiter vorgesehen, dass aus diesen ersten Tonwertzunahmen der zugeordneten Tonwerte eine erste Tonwertzunahmekurve oder Tonwertekurve durch Interpolation ermittelt wird. Hierbei ist unter der Tonwertekurve insbesondere eine Kurve zur Darstellung der spektralen Ist-Daten in Abhängigkeit von den vorgegebenen Tonwerten, d.h. insbesondere ein Ist/Soll-Vergleich zu verstehen.

Desweiteren wird wenigstens eine zweite Teilmenge der Ist-Daten zur Bestimmung des wenigstens einen Parameters eines Modells zur Berechnung von Farbwerten des Druckprozesses herangezogen. Durch einen Vergleich von berechneten Farbwerten basierend auf dem Modell mit gemessenen Farbwerten, beispielsweise aus der zweiten Teilmenge oder auch aus mehreren Teilmengen des Testelements oder auch von verschiedenen Testelementen kann durch eine iterative Anpassung der Parameter, bei Verringerung der Differenz aus dem Vergleich optimiert werden.

Weiter soll die Tonwertzunahmekurve, bzw. Tonwertkurve aus der ersten Teildatenmenge zur Korrektur der Zuordnung von Tonwerten der Druckfarben zu gedruckten Farbwerten bzw. deren Spektren verwendet werden. Diese Korrekturkurve soll sodann zur Berechnung der entsprechenden Charakterisierungsdaten des Druckprozesses verwendet werden. Zum Beispiel können aus dieser Korrekturkurve Tabellenspeicher erzeugt werden. Insbesondere kann so ein genaueres Modell des Druckprozesses erreicht werden, welches eine ausreichend exakte Berechnung der Charakterisierungsdaten unter Verwendung eines kleineren Testelementes ermöglicht.

Im Gegensatz zu der alleinigen Vorgehensweise zur Ermittlung von Farbprofilen über interpolierte Tonwerte bzw. Tonwertzunahmekurven können hier über das Modell des Druckprozesses auch tatsächlich vorhandene, im Einzelnen nicht unbedingt bekannte physikalische Randbedingungen des Druckprozesses selber bei der Ermittlung der Charakterisierungsdaten berücksichtigt werden. Insbesondere können Tonwertzunahmen nun viel genauer berücksichtigt werden.

Da mittels des verwendeten Modells diese physikalischen Eigenschaften berücksichtigt werden können, ist zur Ermittlung der ersten Tonwertzunahmekurve bzw. Tonwertekurve durch Interpolation nicht mehr notwendigerweise eine besonders große Anzahl von Farbfeldern zu ihrer Ermittlung zugrunde zu legen. Die Anzahl von Farbfeldern innerhalb eines Testelements kann durch dieses Verfahren daher begrenzt werden. Dies gilt ebenso für die Ermittlung der gesamten notwendigen Charakterisierungsdaten.

In einer bevorzugten Ausführungsform der Erfindung ist es vorgesehen, dass als Modell das spektrale Yule-Nielsen Neugebauer-Modell, vorzugsweise das segmentierte spektrale Yule-Nielsen-Neugebauer Modell verwendet wird und mittels wenigstens der ersten oder zweiten Teilmenge ein Faktor n als Parameter zur Modellierung der optischen Punktverbreiterung iterativ bestimmt wird. So kann mittels eines iterativen Verfahrens ein Modell ermittelt werden, welches einen optischen Punktzuwachs beschreibt und eine genauere Zuordnung von Tonwerten zu spektral ermittelten Farbwerten auch in Bereichen, in denen keine entsprechenden Farbfelder gedruckt wurden, ermöglicht.

Erfindungsgemäß ist es vorgesehen, dass aus der ersten Teilmenge der spektralen Ist-Daten densitometrische, farbmetrische oder aber spektrale erste Tonwerte bzw. Tonwertezunahmen berechnet werden. Bei Sonderfarben sollen vorzugsweise spektrale Tonwerte, bzw. Tonwertzunahmen berechnet werden. Insbesondere ist es auch möglich, dass ausschließlich bei den Farbfeldern, welche Farbwerte von Sonderfarben aufweisen, spektrale Tonwerte bzw. Tonwertzunahmen berechnet werden, bei den übrigen Farbfeldern allerdings densitometrische, farbmetrische oder spektrale Tonwerte bzw. Tonwertzunahmen berechnet werden. Insbesondere können aus diesen ermittelten bzw. berechneten Tonwerten bzw. Tonwertzunahmen entsprechende Kurven, beispielsweise durch Interpolation, ermittelt werden. Allgemein werden berechnete spektrale Tonwerte aber bevorzugt.

In einer bevorzugten Ausführungsform der Erfindung ist es vorgesehen, dass es sich bei der ersten Teilmenge um spektrale Ist-Daten handelt, welche von Farbkeilen aufgenommen wurden, welche vorzugsweise aus Farbfeldern bestehen, die ausschließlich durch eine Druckfarbe und bevorzugt auf Tonwerte mit Abständen von 10 % zueinander basieren. Inklusive eines Nullprozentwertes ergibt dieses, beispielsweise für einen Vierfarbdruck, insgesamt 44 Farbfelder. Werden sechs Druckfarben verwendet, so erhöht sich die Anzahl auf 66 Farbfelder, welche zur Ermittlung von ersten Tonwertzunahmekurven oder Tonwertekurven durch Interpolation verwendet werden.

In einer weiteren Entwicklung des Verfahrens ist vorgesehen, dass es sich bei der zweiten Teilmenge um Daten von Farbfeldern handelt, die durch das Übereinanderdrucken von verwendeten Druckfarben gebildet werden. Die hierfür verwendeten Druckfarben werden gemäß Tonwerten gedruckt, die aus einer vorgegebenen Stützstellenauswahl ausgewählt werden. Vorzugsweise soll die Stützstellenauswahl insgesamt k Stützstellen aufweisen. Die einzelnen Farbfelder werden dann gebildet, indem die Druckfarben gemäß jeder möglichen Kombination der Stützstellen übereinander gedruckt werden. Bei der Verwendung von m Druckfarben ergeben sich somit $k^m$ Kombinationen von übereinander gedruckten Druckfarbendeckungen.

Bevorzugt werden die Stützstellen 0 %, 40 % und 100 % zur Auswahl gestellt, wodurch sich für ein Vierfarbprozess insgesamt 81 weitere Farbfelder für die Ermittlung der zweiten Teilmenge der spektralen Daten ergeben. Bei einem Fünffarbprozess ergeben sich dann zusätzlich 243 Farbfelder.

Um die Charakterisierungsdaten eines Vierfarbdruckprozesses zu ermitteln, sind somit insgesamt 44 plus 81 = 125 Farbfelder notwendig, welches wesentlich weniger als die Farbfelder gemäß dem Stand der Technik sind (gemäß ISO 12642-2 werden typischerweise 1617 Farbfelder verwendet).

In einer erfindungsgemäßen Weiterbildung des Verfahrens ist es vorgesehen, dass das wenigstens eine Testelement Farbfelder in Farbkeilen zur Bestimmung der Daten der ersten Teilmenge und Farbfelder zur Bestimmung der Daten der Daten der zweiten Teilmenge aufweist, wobei die Menge der Farbfelder zur Bestimmung der ersten oder zweiten Teilmenge um die Farbfelder reduziert wird, die bereits zur Bestimmung der zweiten oder ersten Teilmenge verwendet wird. Diese Farbfelder sollen dann nur in einer der beiden Mengen gedruckt aber, zur Bestimmung beider Teilmengen herangezogen werden. Alternativ sollen Farbfelder zur Bestimmung der ersten oder zweiten Teilmenge, denen die gleichen Tonwerte zugrunde liegen, sowohl zur Bestimmung der ersten als auch der zweiten Teilmenge herangezogen werden, wobei insbesondere eine Mittelwertbildung für mehrfach bedruckte Farbfelder vorgesehen ist.

Somit kann entweder eine Verringerung der notwendigen Farbfelder im Testelement vorgesehen sein oder aber die Genauigkeit erhöht werden.

Für einen Vierfarbdruckprozess können beispielsweise vier Weißfelder mit 0 Prozent Farbdeckung für die erste Teilmenge gestrichen werden und zur Bestimmung dieses Nullprozentwertes ausschließlich das Weißfeld mit 0 Prozent Flächendeckung für alle übereinander gedruckten Farbkombinationen aus der Farbfeldmenge genommen werden, welche für die Bestimmung der zweiten Teilmenge herangezogen wird. Ebenso können von den Farbfeldern zur Bestimmung der zweiten Teilmenge diejenigen herausgestrichen werden, welche ausschließlich eine Druckfarbe, hier z.B. 40 % und 100 % aufweisen.

Ein minimales Testelement besteht dann aus 40 Farbfeldern zur Bestimmung der ersten Daten und 73 Farbfeldern zur Bestimmung der zweiten Daten, wobei aus der zweiten Farbfeldmenge ein Farbfeld (Weiß) zur Bestimmung der ersten Teilmenge und aus der ersten Farbfeldmenge acht Farbfelder (4 x 40 % und 4 x 100 %) zur Bestimmung der zweiten Teilmenge mit herangezogen werden. Solch ein minimales Testelement besteht dann für einen Vierfarbdruck aus insgesamt 113 Farbfeldern.

Weiterhin ist in einer Weiterbildung vorgesehen, dass die Charakterisierungsdaten abgespeichert werden und wenigstens unter Verwendung dieser Charakterisierungsdaten ein Farbprofil des Druckprozesses erstellt wird, wobei dieses Farbprofil zur Farbsteuerung einer Druckmaschine des Druckprozesses verwendet werden soll.

Wie beschrieben, kann also ein minimales Testelement oder auch ein leicht vergrößertes minimales Testelement mit redundanten Feldern verwendet werden, um alle ersten Charakterisierungsdaten des Zieldruckprozesses zu berechnen.

Mittels dieser ersten Charakterisierungsdaten oder auch direkt unter Verwendung des Modells zur Berechnung der ersten Charakterisierungsdaten können erfindungsgemäß die Tonwerte des Zieldruckprozesses, welche den zweiten Farbwerten zugeordnet sind, direkt iterativ ermittelt werden.

Dieses Verfahren beruht auf einer Minimierung des Farbabstands zwischen dem vorgegebenen zweiten Farbwert ($L_2a_2b_2$) und einem temporär berechneten Farbwert ($L_ta_tb_t$). Der Farbabstand dE wird mit folgender Beziehung berechnet:

$$dE = \sqrt{(L_2 - L_t)^2 + (a_2 - a_t)^2 + (b_2 - b_t)^2}$$

Der Startwert für die Iteration kann beliebig gewählt werden, es ist aber zweckmäßig mit einem Wert von C=M=Y=50% zu starten. Mit dem Startwert wird ein erster Wert $L_ta_tb_t$ berechnet sowie der Farbabstand $dE^0$. Diese Berechnung des temporären Farbwertes $l_ta_tb_t$ erfolgt dabei mittels der ersten Charakterisierungsdaten bzw. mittels eines aus ihnen berechneten Profils.

In einem ersten Schritt wird der Tonwert für C um dx=2% erhöht ($C^+$) und um dx=2% erniedrigt ($C^-$). Der Wert dx=2% hat sich als zweckmäßig erwiesen, er kann aber auch anders gewählt werden. Mit diesen beiden modifizierten Werten wird der Farbabstand $dE^+$ und $dE^-$ berechnet. Ist $dE^+$ kleiner als $dE^0$, wird als neuer Wert für C der um 2% erhöhte Wert verwendet. Ist $dE^-$ kleiner als $dE^0$, wird der um 2% erniedrigte Wert für C verwendet. Sind beide Werte $dE^+$ und $dE^-$ größer als $dE^0$, bleibt C erhalten.

In einem zweiten Schritt wird der Tonwert für M um 2% erhöht ($M^+$) und um 2% erniedrigt ($M^-$). Mit diesen beiden modifizierten Werten wird der Farbabstand $dE^+$ und $dE^0$ berechnet. Ist $dE^+$ kleiner als $dE^0$, wird als neuer Wert für M der um 2% erhöhte Wert verwendet. Ist $dE^-$ kleiner als $dE^0$ wird der um 2% erniedrigte Wert für M verwendet. Sind beide Werte $dE^+$ und $dE^-$ größer als $dE^0$, bleibt M erhalten.

In einem dritten Schritt wird der Tonwert für Y um 2% erhöht ($Y^-$) und um 2% erniedrigt ($Y^+$). Mit diesen beiden modifizierten Werten wird der Farbabstand $dE^+$ und $dE^-$ berechnet. Ist $dE^+$ kleiner als $dE^0$, wird als neuer Wert für Y der um 2% erhöhte Wert verwendet. Ist $dE^-$ kleiner als $dE^0$, wird der um 2% erniedrigte Wert für Y verwendet. Sind beide Werte $dE^+$ und $dE^-$ größer als $dE^0$, bleibt Y erhalten. Diese drei Schritte werden iterativ solange wiederholt bis sich die Werte für CMY nicht mehr verändern, der Farbabstand nicht mehr kleiner wird. Die neuen CMY-Tonwerte stellen einen besseren Näherungswert für das Ergebnis dar.

In einem nächsten Schritt wird der Wert dx verkleinert, zweckmäßigerweise halbiert. Mit diesem neuen Werte werden die obigen drei Schritte wiederholt, bis sich keine Verbesserung des Ergebnisses einstellt. Der Wert dx wird nun solange iterativ verkleinert, bis eine vorgegebene Ergebnisgenauigkeit erreicht ist. Dies ist üblicherweise bei einem dx-Werte von 0,05% erreicht, höhere Genauigkeiten verbessern das Verfahren nicht mehr sondern sind nur zeitaufwändiger.

Für diese Berechnung der Tonwerte zu den vorgegebenen zweiten Farbwerten und umgekehrt werden keine Profile oder Tabellen benötigt, die Berechnung kann direkt aus den spektral vermessenen Farbfeldern des Testelementes erfolgen. Dieses erfolgt, wie oben beschrieben, z. B. mittels des segmentierten spektralen Yule-Nielsen-Neugebauer Modells.

Um die ersten Farbwerte des Referenzdruckprozesses zu ermitteln, ist es in einer alternativen Ausführungsform vorgesehen, diese aus den Werten des Papierweißes in einem geräteunabhängigen Farbraum, z. B. dem Lab-Farbraum unter Verwendung eines Abschwächungsfaktors D zu ermitteln.

Hierfür können aus den Farbwerten des Papierweißes ($L^*_{RW}$, $a^*_{RW}$, $b^*_{RW}$) des Referenzdruckprozesses die ersten Farbwerte ($L_1a_1b_1$) bei vorgegebenen Helligkeitswerten $L_1$ gemäß der folgenden Formel (1) zu $a_1$ und $b_1$ bestimmt werden:

$$A_1 = a^*_{RW} \times (1\text{-}D \times (L^*_{RW} - L_1) / (L^*_{RW})$$

$$B_1 = b^*_{RW} \times (1\text{-}D \times (L^*_{RW} - L_1) / (L^*_{RW})$$

Der Abschwächungsfaktor D kann dabei experimentell bestimmt werden. Als Abschwächungsfaktor D hat sich der Wert D = 0,85 experimentell als sehr brauchbar erwiesen, um im Wesentlichen erste Farbwerte auf oder zumindest nahe der Grauachse des Farbraums des Referenzdruckprozesses zu ermitteln.

In einer Weiterbildung der Erfindung ist es vorgesehen, dass zunächst Papierfarbwerte für das Papierweiß des Referenz- und des Zieldruckprozesses bestimmt werden. Dieses kann beispielsweise mittels verwendeter Testelemente geschehen. Erfindungsgemäß soll dann die Ermittlung der zweiten Farbwerte des Zieldruckprozesses unter Berücksichtigung gerade der Unterschiede der Papierweißwerte ermittelt werden. Hierbei kann im Wesentlichen die Anpassung des menschlichen Auges an die unterschiedlichen Papierweißwerte bzw. Papierfarbwerte der unterschiedlichen Bedruckstoffe berücksichtigt werden.

Erfindungsgemäß kann die Gleichung (1) auch für eine Anpassung des Papierweiß ($L^*_{RW}$, $a^*_{RW}$, $b^*_{RW}$) des Referenzdruckprozesses an das Papierweiß ($L^*_{ZW}$, $a^*_{ZW}$, $b^*_{ZW}$) des Zieldruckprozesses verwendet werden. Mit den Differenzen

$$dL^* = L^*_{RW} - L^*_{ZW}, \quad da^* = a^*_{RW} - a^*_{ZW}, \quad db^* = b^*_{RW} - b^*_{ZW} \qquad (2)$$

ergeben sich die Beziehungen

$$L^{*\prime} = L^* - dL^* \times (1 - 0{,}85 \times (L^*_{RW} - L^*) / L^*_{RW})$$

$$a^{*\prime} = a^* - da^* \times (1 - 0{,}85 \times (L^*_{RW} - L^*) / L^*_{RW}) \qquad (3)$$

$$b^{*\prime} = b^* - db^* \times (1 - 0{,}85 \times (L^*_{RW} - L^*) / L^*_{RW})$$

für allgemeine Farbwerte ($L^*a^*b^*$) des Referenzdruckprozesses und entsprechende Farbwerte ($L^{*\prime}a^{*\prime}b^{*\prime}$) des Zieldruckprozesses.

Auf diese Weise können insbesondere unter Bestimmung von grauen Farbwerten als erste Farbwerte ($L_1a_1b_1$) aus dem Papierweiß ($L^*_{RW}$, $a^*_{RW}$, $b^*_{RW}$) des Referenzdruckprozesses und aus dem Papierweiß ($L^*_{ZW}$, $a^*_{ZW}$, $b^*_{ZW}$) des Zieldruckprozesses unter Berücksichtigung eines Abschwächungsfaktors D die zweiten Farbwerte ($L_2a_2b_2$) des Zieldruckprozesses ermittelt werden. Der Einfachheit halber wurde der Abschwächungsfaktor D in Gleichung 3 bereits durch den experimentell bevorzugten Wert 0,85 ersetzt.

Die Aufgabe der Erfindung wird weiterhin durch ein Drucksystem gemäß dem Oberbegriff von Anspruch 6 gelöst, welches eine Graubalancekorrektureinrichtung mit wenigstens einer Berechnungseinheit zur Ermittlung von Tonwerten der bunten Prozessfarben des Zieldruckprozesses aufweist. Diese Berechnungseinheit ist dabei so ausgeführt, dass sie die Tonwerte gemäß einer korrigierten Graubalance ermitteln kann. Die Berechnungseinheit ist weiterhin so ausgestaltet, dass sie die Tonwerte in Abhängigkeit von ersten Farbwerten auf oder im Umfeld der Grauachse des Farbraums des Referenzdruckprozesses und von den ersten Charakterisierungsdaten des Zieldruckprozesses bestimmt.

In einer Weiterbildung des Drucksystems weist dieses zusätzlich erfindungsgemäß eine spektrale Messeinrichtung zur spektralen Vermessung von Messfeldern eines Testelements auf. Mittels dieser Messeinrichtung sollen spektrale Ist-Daten ermittelt werden können.

Des Weiteren soll vorteilhafter Weise ein Umrechnungsorgan zur Berechnung der ersten Charakterisierungsdaten aus den spektralen Ist-Daten vorhanden sein. Auf diese Weise können durch das Zusammenwirken der spektralen Messeinrichtung und des Umrechungsorgans erste Charakerisierungsdaten auf einfache Weise berechnet werden. Bei der spektralen Messeinrichtung kann es sich beispielsweise um ein Spektralphotometer handeln.

Eigenständiger Schutz wird auch für ein Computerprogrammprodukt beansprucht, welches zur Durchführung des erfindungsgemäßen Verfahrens geeignet ist.

Des Weiteren sind eigenständige Speichermittel zur Speicherung dieses Computerprogrammprodukts beansprucht.

Ein Beispiel der Erfindung, auf das die Erfindung aber nicht beschränkt ist und aus dem sich weitere erfindungsgemäße Merkmale ergeben können, ist in den folgenden Zeichnungen dargestellt.

Es zeigen:

Figur 1:     ein Drucksystem zur Durchführung einer Graubalancekorrektur eines Zieldruckprozesses,

Figur 2:     ein Testelement,

Figur 3:      ein reduziertes Testelement,

Figur 4:      einen Komplex zur Berechnung einer Graubalancekorrektur und zur Erzeugung von ersten Charakterisierungsdaten, und

Figur 5:      einen Ablaufplan der Graubalancekorrektur.

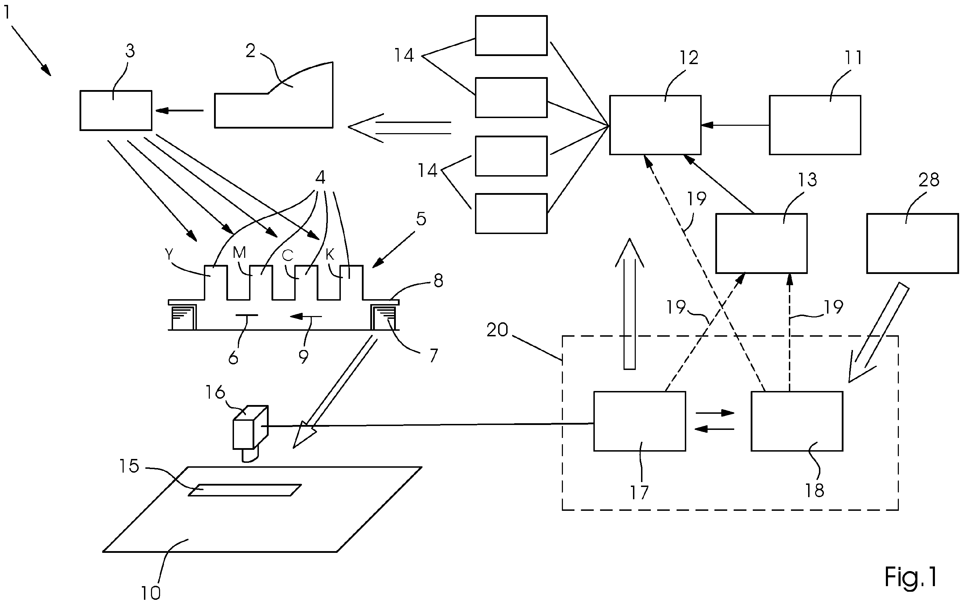

In der Figur 1 ist ein Drucksystem 1 dargestellt, welches im Wesentlichen ein Zieldrucksystem darstellt. Das Drucksystem 1 wird durch die Druckprozessbedingungen beschrieben. Druckprozessbedingungen umfassen dabei die Eigenschaften des Druckprozesses, wie z. B. das Rasterverfahren, Rasterwinkel, Rasterweite, Druckplattenbelichter, zwei Druckfarben CMYK oder verwendete Druckbogen 6.

Alle Bestandteile der Druckprozessbedingungen wirken sich auf die Farbdarstellung auf einem bedruckten Bogen 6 aus.

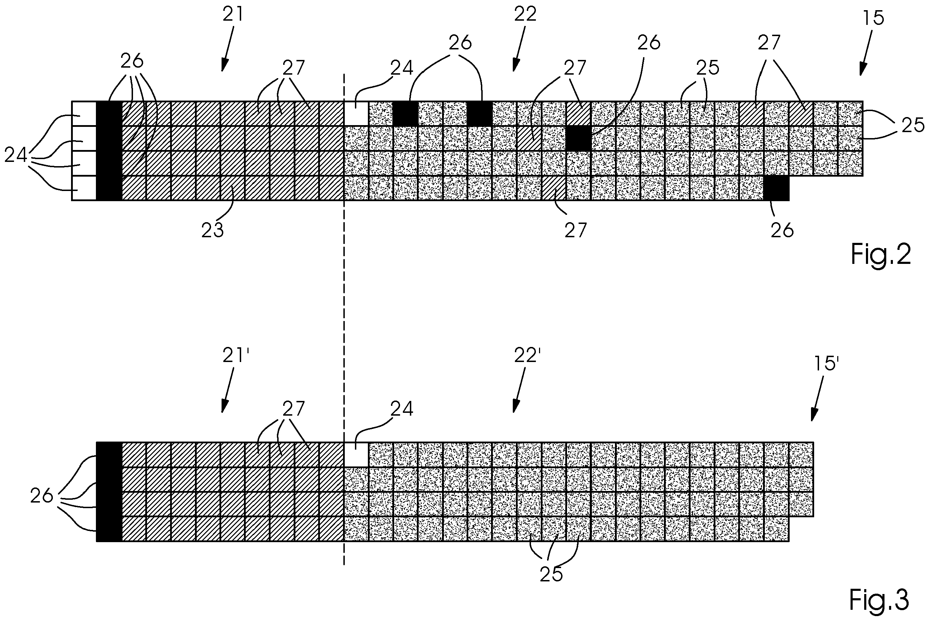

Zur Bebilderung eines Druckbogens 6 in einer Druckmaschine 5 wird zunächst eine elektronische Druckvorlage 11 mittels eines Rasterimageprozessors (RIP) gerastert. Aus der elektronischen Druckvorlage 11 werden auf diese Weise gerasterte Farbauszüge 14 erstellt, die den einzelnen Druckfarben CMYK des Druckprozesses zugeordnet sind. Die elektronischen Farbauszüge 14 werden einem Plattenbelichter 2 zugeführt, der auf Basis ihrer Daten Druckplatten 3 bebildert. Die Druckplatten 3 werden in Druckwerke 4 der Druckmaschine 5 eingespannt und bebildern in diesen Druckwerken 4 einen Druckbogen 6 mit den verwendeten Druckfarben CMYK. Der Druckbogen 6 wird dafür innerhalb eines Anlegers 8 von einem Bogenstapel 7 vereinzelt und in Transportrichtung 9 durch die Druckmaschine 5 hindurchgeführt. Der dann bedruckte Bogen 6 wird aus der Druckmaschine 5 entnommen. Zur Kalibrierung des Drucksystems 1 wurde der Druckbogen 6 mit einem Testelement 15 bedruckt. Solch ein Testelement 15 bzw. eine hierzu reduzierte Form eines Testelements 15' sind in den Figuren 2 und 3 dargestellt.

Das Testelement 15 wird mittels eines Spektralphotometers 16 vermessen. Auf diese Weise werden spektrale Ist-Daten erzeugt. Diese spektralen Ist-Daten werden einem Komplex 20 zugeführt. Der Komplex 20 besteht aus einer Erzeugungseinrichtung 17 zur Erzeugung von ersten Charakterisierungsdaten des Zieldruckprozesses und einer Berechnungseinheit 18 zur Berechnung einer Graubalancekorrektur für das Zieldrucksystem. Statt den Druckbogen 6 außerhalb der Druckmaschine 5 zu vermessen, ist dieses alternativ auch inline in der Druckmaschine 5 möglich.

Mittels des Komplexes 20 werden sowohl erste Charakterisierungsdaten für den Zieldruckprozess als auch Graubalancekorrekturdaten erzeugt. Diese Werte können verwendet werden, um ein Profil 13 zur Verwendung im RIP 12 in nachfolgenden Druckverfahren zu erzeugen oder zu korrigieren. Die Daten können alternativ auch direkt an den RIP 12 zur Rasterung einer Druckvorlage 11 übergeben werden. Dieses wird mit gestrichelten Linien 19 dargestellt.

Um mittels des Komplexes 20 eine Graubalancekorrektur des Zieldrucksystems durchzuführen, werden Prozessdaten 28 dem Komplex 20 zur Verfügung gestellt. Bei den Prozessdaten 28 handelt es sich um Daten einer Referenzdruckprozesses. Beim dem Referenzdruckprozess handelt es sich im Wesentlichen um einen ähnlichen Druckprozess, wie er durch das Drucksystem 1 des Zieldruckprozesses beschrieben ist. Bei dem Referenzdruckprozess handelt es sich um einen z. B. kalibrierten Druckprozess, welcher in Bezug auf seine Graubalance bewertet wurde, und eine Vorlage bezüglich der zu erreichenden Graubalance des Zieldruckprozesses darstellt. Bei den Prozessdaten 28 des Referenzdruckprozesses kann es sich beispielsweise um erste Farbwerte $(L_1a_1b_1)$ des Referenzdruckprozesses handeln, die Grauwerte von Kombinationen aus bunten Druckfarben auf der Grauachse des Referenzdruckprozesses beschreiben. Die Prozessdaten 28 können dabei weiter auch den Farbwert $L^*_{RW}a^*_{RW}b^*_{RW}$ des Papierweiß des Referenzdruckprozesses und weitere notwendige Druckprozessbedingungen des Referenzdruckprozesses umfassen. Alternativ oder zusätzlich können die Prozessdaten 28 auch ein Farbprofil des Referenzdruckprozesses oder Charakterisierungsdaten des Referenzdruckprozesses umfassen. Die Charakterisierungsdaten des Referenzdruckprozessses können beispielsweise mit den gleichen Testelementen 15, 15' und dem gleichen Verfahren, wie unten beschrieben, ermittelt werden.

In der Figur 2 ist ein erfindungsgemäßes erstes Beispiel eines Testelements 15 gezeigt. Es handelt sich hierbei um ein Beispiel für ein Vierfarbsystem mit den Farben CMYK

Das Testelement 15 ist dabei in zwei Teilbereiche 21 und 22 aufgeteilt. Diesen Teilbereichen 21,22 des Testelementes 15 sind jeweils Farbfelder 23 zugeordnet, wobei der Menge der Farbfelder 23 die einem Teilbereich 21,22 zugeordnet sind jeweils eine eigene Teilmenge 54, 54 an später gemessenen Ist-Daten zugeordnet wird.

Der Teilbereich 21 umfasst Farbfelder 23, welchen einen Stufenkeil aufbauen. Die Farbfelder 23 sind dafür jeweils ausschließlich aus einer Druckfarbe (CMYK) mit unterschiedlichen Tonwerten aufgebaut. Liegt der Tonwert jeweils bei 0 % so werden vier weiße Farbfelder 24 gebildet. Bei einem Tonwert von 100 % ergeben sich die vier Volltonfarbfelder 26. Die übrigen Farbfelder 23 ergeben sich durch Variationen der Tonwerte mit jeweils einem 10%igen Abstand des Tonwertes, so dass sich hier insgesamt 36 Tonwertfarbfelder 27 ergeben.

Während der Teilbereich 21 aus 44 Farbfeldern in Form eines Stufenkeils aufgebaut ist, besteht der Teilbereich 22 insgesamt aus 81 Farbfeldern 23. Hier werden die Farbfelder 23 durch das Übereinanderdrucken der unterschiedlichen Druckfarben (CMYK) in allen möglichen Kombinationen gebildet. Die möglichen Kombinationen ergeben sich dabei aus der Anzahl der Stützstellen, in denen die Tonwerte der einzelnen Druckfarben (CMYK) vorgegeben werden. Im hier dargestellten Beispiel sollen als Stützstellen Farbwerte der Werte 0 %, 40 % und 100 % verwendet werden, so dass für jede Druckfarbe CMYK drei unterschiedliche Tonwerte zur Verfügung stehen. Die Anzahl der Kombinationen der übereinander gedruckten Druckfarben CMYK ergibt sich daher gemäß der Formel $k^m$, wobei k die Anzahl der Druckstellen und m die Anzahl der Druckfarben beschreibt, *zu 81.*

Auch bei den möglichen Kombinationen der übereinander gedruckten Druckfarben CMYK ergibt sich ein Feld mit einem weißen Farbfeld 24, insgesamt vier Volltonfarbfelder 26 mit einer Deckung von 100 % jeweils, mit nur einer Druckfarbe CMYK und vier weitere Tonwertfarbfelder 7 mit einer Deckung von 40 %, mit jeweils nur einer Druckfarbe CMYK. Die übrigen 72 Farbfelder 23 ergeben sich dann durch gemischte Farbfelder 5. Unter einem gemischten Farbfeld 25 ist ein Farbfeld 23 zu verstehen, welches mit wenigstens zwei unterschiedlichen Druckfarben CMYK gedruckt wurde.

Die Figur 3 zeigt eine alternative Version eines Testelementes 15', wobei hier in den Teilbereichen 21', 22' jeweils redundante Farbfelder 23 gestrichen wurden.

Da in beiden Teilbereichen 21,22 des Testelementes 15 weiße Farbfelder 24 vorhanden waren, wurden im Testelement 15' die weißen Farbfelder 24 des Teilbereichs 21 gestrichen, so dass der reduzierte Teilbereich 21' nunmehr vier Volltonfarbfelder 26 und 36 Tonwertfarbfelder 27 aufweist. Im Teilbereich 22' wurde dagegen auf die vier Volltonfarbfelder 26, welche identisch zu den Volltonfarbfeldem 26 des Teilbereichs 21' sind, sowie auf die Tonwertfarbfelder 27, welche auch identisch zu Tonwertfarbfeldern 27 des Teilbereichs 21' waren, verzichtet, so dass hier nur noch eine Anzahl von 72 gemischten Farbfeldern 25 und einem weißen Farbfeld 24 Verwendung findet, mithin nur noch insgesamt 23 Farbfelder verwendet werden.

Das gesamte reduzierte Testelement 15' umfasst dann nur noch 113 Farbfelder 23 und dient dennoch als Ausgangspunkt zur Ermittlung der notwendigen ersten Charakterisierungsdaten des Zieldruckprozesses.

Durch die geringe Ausdehnung dieses reduzierten Testelementes 15' oder auch schon des Testelementes 15 selber ist es möglich, diese Testelemente 15, 15' beispielsweise sogar während eines Druckprozesses in einem nicht genutzten Randbereich des Druckbogens aufzubringen. Bevorzugt werden sie aber in einer dezidierten Testform verwendet. Während für einen Vierfarbdruck der Teilbereich 22 $k^m = 3^4 = 81$ Farbfelder 23 umfasst, würde ein entsprechender Teilbereich 22 eines Testelements 15 für sechs Druckfarben bei ebenfalls 3 Stützstellen $3^6 = 729$ Farbfelder 23 aufweisen.

Eine weitere Reduzierung der Farbfelder 23 kann insbesondere für eine Verwendung von mehr als vier Druckfarben durch eine Farbraumseparation, wie sie in der DE 10 200 24 001 937 beschrieben ist, vorgenommen werden. Hierbei wird auch für einen Sechsfarbendruck der Farbraum entsprechend in Bereiche separiert, die ausschließlich drei Druckfarben aufweisen. Bezugnehmend auf die Beschreibung der DE 10 20024 001 937 für diese Aufspaltung des Farbraumes, d.h. die beschriebenen Separationen müssen dann für jeden dieser separierten Farbraumbereiche wieder nur $k^m$ mit m verwendeten Druckfarben im betrachteten Bereich und k der Anzahl der Stützstellen, d.h. der verwendeten Werte im Übereinanderdruck der unterschiedlichen Druckfarben entsprechend insgesamt dreimal $k^m = 3 \cdot 81 = 243$ Farbfelder 23 verwendet werden, wobei in jedem Teilbereich oder Segment des Farbraums ausschließlich drei Stützstellen verwendet werden und vier Druckfarben übereinander gedruckt werden. Ein Übereinanderdrucken von mehr als vier Druckfarben ist nicht vorgesehen.

Ein wie oben beschriebenes Testelement 15, 15' kann im Zieldruckprozess sowohl zur Ermittlung der Charakterisierungsarten des Drucksystems 1 als auch zur Graubalancekorrektur auf eine Druckplatte 3 belichtet und in der Druckmaschine 5 auf einen Druckbogen 6 aufgetragen werden. Alternativ ist es insbesondere auch möglich, aufgrund der Ausmaße der Testelemente 15, 15' diese in einem Randbereich eines Druckbogens 6 zu bedrucken.

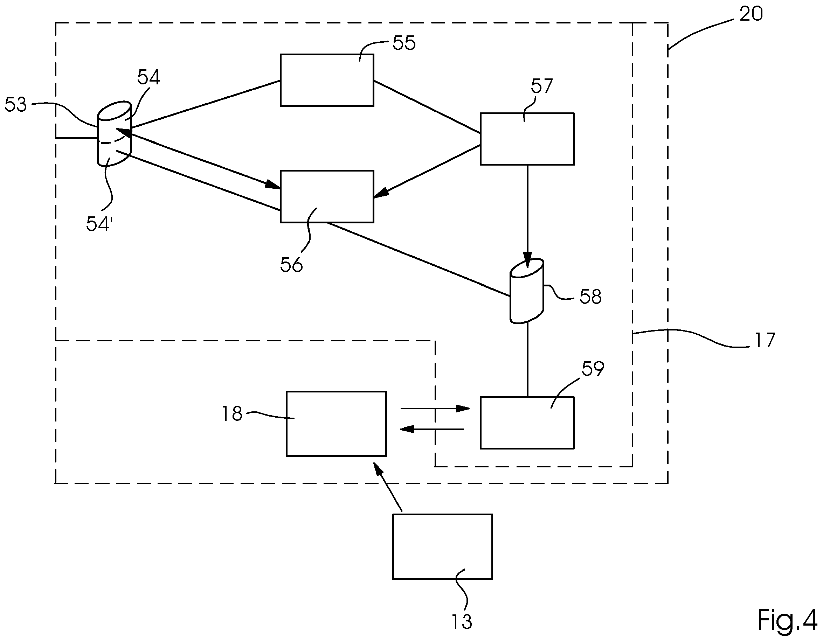

Fig. 4 zeigt einen entsprechenden Aufbau des Komplexes 20 zur Erzeugung von ersten Charakterisierungsdaten und der Graubalancekorrektur. Im Folgenden wird von der Verwendung eines reduzierten Testelements 15' ausgegangen. Die Verwendung des erweiterten Testelements 15, insbesondere mit Bildung von Mittelwerten ist für einen Fachmann entsprechend leicht durchführbar und kann ggf. zur Steigerung der Genauigkeit auch bevorzugt werden.

Die vom Spektralphotometer 16 ermittelten Messergebnisse werden als spektrale Ist-Daten 54, 54' in einer Speichereinrichtung 53 abgespeichert. Die spektralen Ist-Daten bestehen dabei aus einer ersten Teilmenge 54 und einer zweiten Teilmenge 54', welche jeweils den Teilbereichen 21' und 22' des reduzierten Testelements 15' zugerechnet werden können, wobei die Farbfelder 23, die zur Reduzierung des Testelements 15 auf ein reduziertes Testelement 15' im jeweiligen Teilbereich 21, 22 weggelassen wurden, nun beiden Teilmengen 54, 54' zugeordnet werden. Dies kann insbesondere durch eine Verdoppelung der entsprechenden Daten erreicht werden.

Die erste Teilmenge 54 der gespeicherten spektralen Ist-Daten wird zu einer Tonwertzunahmeberechnungseinrichtung 55 weitergeleitet, wobei alternativ die Tonwertzunahmeberechnungseinrichtung 55 auch direkt auf die Teildatenmenge 54 zugreifen kann. Auf Grundlage dieser spektralen Daten werden nach bekannten Verfahren densitometrische, farbmetrische oder spektrale Tonwerte und/oder Tonwertzunahmen, insbesondere aus den Farbkeilen des Teilbereichs 21' des reduzierten Testelements 15' gewonnen, wobei insbesondere weiter auf das Weißfeld 24 aus dem Teilbereich 22' des reduzierten Teilelements 15' zurückgegriffen wird.

Aus den so ermittelten Tonwertzunahmen für die einzelnen Druckfarben CMYK gemäß der Farbkeile des Teilbereichs 21' oder alternativ eines Teilbereichs 21, werden durch geeignete Interpolationsverfahren entsprechende Tonwertzunahmekorrekturkurven für die einzelnen Druckfarben CMYK ermittelt. Allgemein können durch diese Farbkeile 21' Tonwertzunahmekorrekturkurven, Tonwertekorrekturkurven für alle verwendeten Druckfarben, d.h. auch von Mehrfarbdrucksystemen, insbesondere auch für Sonderfarben, ermittelt werden. Bei der Verwendung von Sonderfarben wird bevorzugt die spektrale Tonwertzunahme aus der ersten Teilmenge der gespeicherten spektralen Daten 54 berechnet. Durch die Verwendung von spektralen Tonwertzunahmen kann allgemein für alle Farben die Genauigkeit erhöht werden.

Weiter greift eine spektrale Berechnungseinrichtung 56 auf die zweite Teilmenge 54' der gespeicherten Ist-Daten im Speicher 53 zu. Durch Verwendung dieser zweiten Teilmenge 54', welche im wesentlichen dem reduzierten Teilbereich 22' des Testelements 15' entspricht und unter Berücksichtigung von spektralen Daten von Farbfeldern 23, die zur Reduzierung des Testelements 15' nicht mehr im Teilbereich 22', stattdessen ausschließlich im Teilbereich 21' verwendet werden, die nun zur ersten Teildatenmenge 54 gehören, können mittels eines in der spektralen Berechnungseinrichtung 56 hinterlegten Modells Spektren für alle möglichen Übereinanderdrucke der verschiedenen Druckfarben berechnet werden.

Bevorzugt wird als Modell zur Berechnung der Spektren der unterschiedlichen Übereinanderdrucke von Druckfarben das sogenannte segmentierte spektrale Yule-Nielsen-Neugebauer-Modell verwendet (englisch: CYNSN Cellular Yule-Nielsen modified spectral Neugebauer model). Auch andere Modelle zur Berechnung von Spektren aus der Vorgabe von gemessenen Stützpunkten können verwendet werden.

Gemäß der segmentierten spektralen Yule-Nielsen Neugebauer-Gleichung berechnet sich das Spektrum für eine Kombination von Druckfarben in einem Segment eines Körpers, welcher durch die verwendeten Druckfarben aufgespannt wird gemäß der folgenden Gleichung:

$$R(\lambda) = \left[ \sum_{i=1}^{NP} a_i \times R_i^{1/n}(\lambda) \right]^n \tag{4}$$

Im Übrigen werden die verwendeten Stützstellen $R_i$, welche die Eckpunkte der einzelnen Segmente des Körpers der Druckfarben sind, durch die vorgegebenen prozentualen Werte der Druckfarben im Teilbereich 22 bzw. 22' des Testelements 15, 15' definiert. Im verwendeten Beispiel sind somit drei Stützstellen 0 %, 240 % und 100 % definiert. Die Stützstellen $R_i$ entsprechen den spektralen Ist-Daten der Farbfelder 23 an diesen Punkten. Allgemein wird bei der Verwendung von m Druckfarben im Druckprozess ein m-dimensionaler Körper durch die verwendeten Druckfarben aufgespannt, wobei die Achsen des Körpers jeweils aus den spektralen Werten gebildet werden, die den Tonwerten nur einer Druckfarbe entsprechen. Durch die Segmentierung dieses Körpers ergeben sich wiederum Körper, die durch die gewählten Stützstellen innerhalb des Körpers der Druckfarben definiert sind.

Beim üblichen Neugebauer-Modell werden als Stützstellen das Papierweiss und die Volltonfarbfelder verwendet. Im Druck werden zur Charakterisierung dann entsprechend zusätzlich alle Kombinationen der Übereinanderdrucke erstellt. Bei einem Druck mit drei Farben wären dies $2^3 = 8$ Kombinationen, bei einem Druck mit vier Farben $2^4 = 16$ Kombinationen. Allgemein ergibt sich die Anzahl der Kombinationen aus der Anzahl der Stützpunkte pro Farbkomponente potenziert mit der Anzahl der Farbkomponenten zu $NP = k^m$.

Die Einführung eines weiteren Stützpunktes (k = 23) wie im vorgestellten segmentierten spektralen Yule-Nielsen-Neugebauer-Modell führt dann beim Druck mit vier Farben wie erwähnt zu 81 Kombinationen. Anzahl und Verteilung der Stützpunkte für jede Farbkomponente sollte so gewählt werden, dass eine visuell möglichst gleichmäßige Abdeckung erfolgt. Dieses ist durch die vorgeschlagenen Stützpunkte 0 %, 40 % und 100 % gegeben, was sich durch empirische Betrachtung gezeigt hat, wobei auch mit 50% statt 40% sehr gute Ergebnisse erzielt werden.

In Abhängigkeit von den verwendeten Druckfarben, d.h. von ihrer Anzahl und der Anzahl der Stützpunkte, ergibt sich die Anzahl der Segmente oder Zellen des segmentierten Modells zu $Z = (k - 1)^m$, wobei jede Zelle wieder $NP = 2^m$ Stützpunkte hat. Für jedes dieser Segmente gilt dann das einfache spektrale Yule-Nielsen-Neugebauer-Modell und somit die Gleichung (4), wobei sich der Index i auf die Eckwerte eines Segmentes bezieht. Die Anzahl der Eckwerte des Segments NP ergibt sich nach $NP = 2^m$ mit m als Anzahl der Druckfarben. Die Stützstellen werden also durch das Übereinanderdrucken zweier möglicher Druckfarben definiert.

Die Werte $\alpha_i$ sind die sogenannten Demichel-Koeffizienten. Sie ergeben sich beispielsweise bei der Verwendung von drei Druckfarben, z.B. CMY nach den Gleichungen

$$\alpha_1(CMY) = (1-c_I)(1-m_I)(1-y_I)$$
$$\alpha_2(CMY) = (\ c_I)(1-m_I)(1-y_I)$$
$$\alpha_{23}(CMY) = (1-c_I)(\ m_I)(1-y_I)$$
$$\alpha_{24}(CMY) = (\ c_I)(\ m_I)(1-y_I)$$
$$\alpha_{25}(CMY) = (1-c_I)(1-m_I)(\ y_I) \qquad (5)$$
$$\alpha_{26}(CMY) = (\ c_I)(1-m_I)(\ y_I)$$
$$\alpha_{27}(CMY) = (1-c_I)(\ m_I)(\ y_I)$$
$$\alpha_8(CMY) = (\ c_I)(\ m_I)(\ y_I)$$

Die effektiven Flächendeckungen $c_I$, $m_I$ und $y_I$ der Halbtöne müssen für die Berechnung normalisiert werden:

$$c_I = (C - 0) / (\ Cs - 0) \qquad \text{für } C < Cs$$
$$= (C - Cs) / (100 - Cs) \qquad \text{für } C \geq Cs$$
$$m_I = (M - 0) / (\ Ms - 0) \qquad \text{für } M < Ms$$
$$= (M - Ms) / (100 - Ms) \quad \text{für } M \geq Ms \qquad (6)$$
$$y_I = (Y - 0) / (\ Ys - 0) \qquad \text{für } Y < Ys$$
$$= (Y - Ys) / (100 - Ys) \qquad \text{für } Y \geq Ys$$

Mit Cs, Ms, Ys den Tonwerten der Segmentteilung.

Der Übersicht halber wurde sich hier auf drei Druckfarben beschränkt. Bei der Verwendung von vier oder mehr Druckfarben, beispielsweise zusätzlich der Verwendung der Druckfarbe K wie im obigen Beispiel, kommen die Faktoren $k_I$ und $(1 - k_I)$ entsprechend hinzu, sodass bei 12 Stützstellen $R_i$ insgesamt 16 Demichels-Koeffizienten $\alpha_i$ vorgesehen sind.

Die effektiven Flächendeckungen $c_I$, $m_I$ und $y_I$ der Halbtöne beschreiben die relative Flächendeckung eines Druckpunktes, welcher innerhalb eines entsprechenden Segments liegen würden. Wobei mittels der Gleichung (1) auf Grundlage der gemessenen Spektren $R_i$ der k Stützstellen die an den Farbfeldern 24, 25, 26 und 27 des Teilbereichs 22 oder 22' eines Testelements 15 oder 15' ermittelt wurden nun die Spektren beliebiger Tonwertekombinationen innerhalb eines Segments berechnet werden können.

Mittels dieser Vorgaben, die sich wie beschrieben leicht auf vier und mehr Farben erweitern lassen, können dann die spektralen Werte R ($\lambda$) für alle Druckfarbenkombinationen innerhalb eines Segmentes berechnet werden. Mit dem Faktor n gemäß Formel (4) soll dabei einer optischen Bildpunktverbreiterung Rechnung getragen.

Gemäß dem hier vorgestellten Beispiel wird der Faktor n durch die Berechnung der Spektren der Tonwertfarbfelder 27 der Teilbereiche 21, 21' und/oder 22, 22' nach dem segmentierten spektralen Yule-Nielsen-Neugebauer-Modell bestimmt. Werden weitere Farbkeile oder Testelemente auf der gleichen Testform oder Druckform verwendet, so können zusätzlich oder alternativ auch Farbfelder von diesen Testelementen zur Bestimmung des Faktors n herangezogen werden.

Hierfür wird zunächst ein willkürlicher Wert für n eingesetzt, wobei als Startpunkt der Wert n = 2 bevorzugt wird. Durch iteratives Ändern des Faktors bzw. Parameters n wird der Faktor n so angepasst, dass sich die Differenzen zwischen den berechneten Spektren R ($\lambda$) und den gemessenen Spektren der Farbfelder 27 bzw. aller Farbfelder 23 des Teilbereichs 21, 21' und/oder 22, 22' minimieren. n kann dabei insgesamt über alle Farbfelder 23 eines Teilbereichs oder für die einzelnen Farben des Teilbereichs 21, 21' minimiert werden, hier kann dann eine Mittelwertbildung vorgenommen werden.

Da es sich bei dem so ermittelten Faktor n immer noch um ein Modell handelt, können durch dieses so beschriebene Verfahren noch nicht alle Daten zur Charakterisierung eines Druckprozesses hinreichend genau berechnet werden.

Durch die zusätzliche Berücksichtigung der Tonwertzunahmen oder Tonwerten bzw. einer Tonwertzunahmekurve, wie sie sich aus den Farbfeldern 23 der Teilbereiche 21, 21' ergibt, kann die segmentierte spektrale Yule-Nielsen-Neugebauer-Gleichung nach Gleichung (1) soweit angepasst werden, dass alle Daten zur Charakterisierung eines Druckprozesses mit hinreichender Genauigkeit berechnet werden können, d.h. die im Modell verwendete spektrale Yule-Nielsen-Neugebauer-Gleichung kann gemeinsam unter Berücksichtigung der Tonwertzunahmekurvenkorrektur nach den Farbfeldern 23 der Teilbereiche 21, 21' alleine zur Berechnung aller notwendigen Charakterisierungsdaten eines Druckprozesses herangezogen werden, so dass die kleinen Testelemente 15, 15' ausreichend zur Charakterisierung des Druckprozesses sind. Diese können dann gemeinsam mit noch weiteren Testelementen für weitere Bestimmungen entsprechend auf einer Testform vorbereitet werden. Die kleinen Testelemente 15, 15' können vorteilhafterweise große Testelemente vollständig ersetzen ohne Genauigkeit zu opfern.

Die Tonwertzunahmekorrekturkurve nach den Teilbereichen 21, 21' wird wie beschrieben in der Tonwertzunahmeberechnungseinrichtung 55 ermittelt. Für vorgegebene Tonwertekombinationen der Druckfarben, z.B. CMYK, werden gemäß der Erfindung nunmehr nicht diese Tonwerte direkt in die Yule-Nielsen-Neugebauer-Gleichung als Bestandteil der Demichel-Koeffizienten gemäß Gleichung 5 und 6 eingesetzt, sondern diese Tonwerte CMYK werden zunächst gemäß der festgestellten und berechneten Tonwertzunahmekurve korrigiert. Dieses geschieht in einer Tonwertzunahmekorrektureinrichtung 57, welche die so korrigierten Tonwerte C'M'Y'K' als Eingangsgrößen für die effektiven Flächendeckungen $c_l$, $m_l$, $y_l$ und $k_l$ der Demichel-Koeffizienten der Yule-Nielsen-Neugebauer-Gleichung an die Berechnungseinrichtung 56 übergibt. Erst auf Grundlage dieser tonwertzunahmekorrigierten Tonwerte C'M'Y'K' werden dann durch die Berechnungseinrichtung 56 nach dem oben geschildertem Modell die Spektren der vorgegebenen Druckfarbenkombinationen ermittelt. Die so berechneten Spektren R ($\lambda$) für Tonwertekombination $C_bM_bY_bK_b$ werden dann gemeinsam mit den vorgegebenen Tonwertekombination CMYK als Charakterisierungsdaten in einer Speichereinrichtung 58 zur Verfügung gestellt. Mittels dieser Charakterisierungsdaten können dann anschließend in einer Berechnungseinrichtung 59 Profilierungen eines Druckprozesses durchgeführt, Prozesskalibrierungen oder Prozesskontrollen angewandt werden.

Wie bereits beschrieben, ist dieses Verfahren mit einer entsprechenden Anpassung von Demmichel-Koeffizienten und Stützpunkten $R_i$ leicht auch auf Mehrfarbsystem, insbesondere mit Sonderfarben, erweiterbar.

Somit wird auf einfache Weise durch die Verwendung von Tonwertzunahmekorrekturkurven in einer Tonwertzunahmeberechnungseinrichtung 55 für die Verwendung von vorgegebenen Farbwerten unterschiedlicher Druckfarben in ein spektrales Modell des Druckprozesses, hier das segmentierte spektrale Yule-Nielsen-Neugebauer-Modell, die benötigte Anzahl von Farbfeldern 23 eines Testelements 15, 15' sehr stark verringert und vereinfacht, da sich experimentell herausgestellt hat, dass durch diese Wechselwirkung mit der zusätzlichen Tonwertzunahmekorrekturkurve, insbesondere alle spektralen Werte von Testelementen gemäß dem Stand der Technik hinreichend genau genug berechnen lassen und somit sich auch alle dazwischen liegenden Tonwertkombinationen entsprechend genau bestimmen lassen. Somit genügen diese Daten vollständig zur Charakterisierung des Zieldruckprozesses. Statt der Verwendung von Tonwertzunahmekorrekturkurven ist es natürlich auch möglich sowohl die vorgegeben Tonwerte, als auch die aus den ermittelten Farbwerten ermittelten Tonwerte einer entsprechenden Berechnung zu Grunde zu legen.

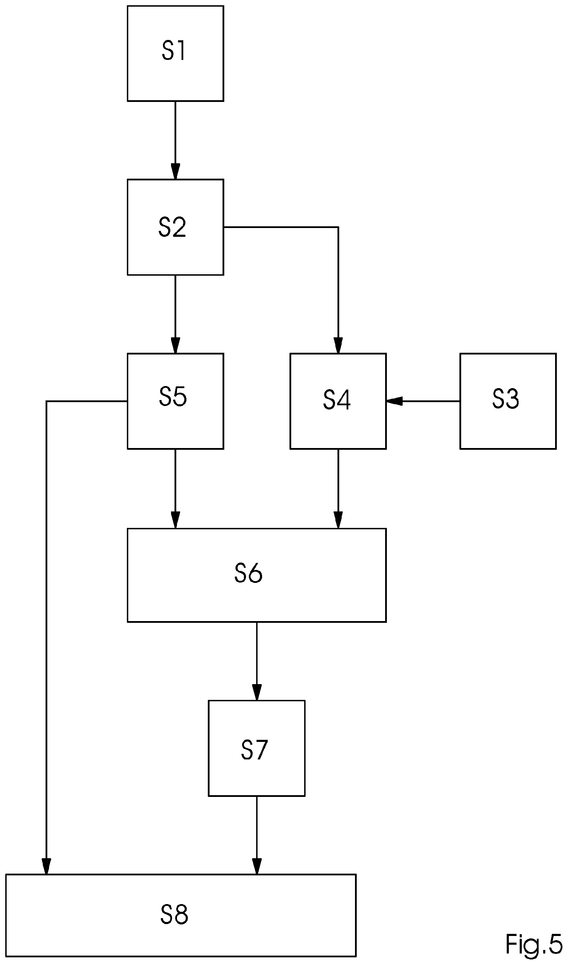

Gleichzeitig oder alternativ zur Berechnung eines vollständigen Satzes von ersten Charakterisierungsdaten des Zieldruckprozesses mittels des genannten spektralen Modells des Zieldruckprozesses kann dieses Modell oder der Satz von ersten Charakterisierungsdaten herangezogen werden, um eine Graubalancekorrektur des Zieldruckprozesses durchzuführen. Ein entsprechender Verfahrensablauf zur Bestimmung der Graubalancekorrektur des Zieldruckprozesses ist in Figur 5 gezeigt.

Zunächst wird im Schritt S1 ein Bogen 6 gemäß den Zieldruckprozessbedingungen mit einem Testelement 15 bebildert. Die Bebilderung kann auch mit dem Testelement 15' erfolgen. Das Testelement 15 wird aber bevorzugt, da hier über Mittelungen genauere Werte erreichbar sind. Zur Bebilderung des Bogens 6 ist es notwendig, zunächst eine Druckplatte 3 in einem Plattenbelichter 2 zu bebildern. Insgesamt müssen so viele Druckplatten 3 bebildert werden, wie Farbauszüge 14 für die verwendeten Druckfarben CMYK des Zieldruckprozesses Verwendung finden. Die Farbauszüge 14 werden dafür vorher mittels eines RIPs 12 auf Grundlage einer Druckvorlage 11 erzeugt. Die Druckvorlage 11 kann zusätzlich zu den Daten für das Testelement 15 auch weitere Testelemente oder Probedrucke aufweisen.

Ein Bogen 6 wird daher im Schritt S1 innerhalb der Druckmaschine 5 mit den einzelnen Druckfarben CMYK beaufschlagt, so dass der bedruckte Bogen 6 dann das gedruckte Testelement 15 bzw. 15' aufweist.

Im anschließenden Schritt S2 wird das gedruckte Testelement 15 mittels eines Spektralphotometers 16 vermessen. Hierbei werden spektrale Ist-Daten 54, 54' ermittelt. Aus diesen spektralen Ist-Daten 54, 54' werden im folgenden Schritt S5 erste Charakterisierungsdaten des Zieldruckprozesses ermittelt. Aus diesen ersten Charakterisierungsdaten des Zieldruckprozesses kann insbesondere auch ein Papierfarbwert ($L^*_{ZW}a^*_{ZW}b^*_{ZW}$) des verwendeten Bogens 6 des Zieldruckprozesses bestimmt werden. Alternativ kann dieser Papierfarbwert ($L^*_{ZW}a^*_{ZW}b^*_{ZW}$), d. h. das Papierweiß des Zieldruckprozesses, als Farbwert auch direkt im Schritt S2 aus den spektralen Ist-Daten 54, 54' ermittelt werden, da hier insbesondere Felder ohne Druckfarben CMYK vorgesehen sind. Dieser Papierweißwert ($L^*_{ZW}a^*_{ZW}b^*_{ZW}$) wird dann in einem weiteren Schritt S4 zur Ermittlung von zweiten Farbwerten ($L_2a_2b_2$) des Zieldruckprozesses verwendet. Bei diesen zweiten Farbwerten ($L_2a_2b_2$) des Zieldruckprozesses handelt es sich um die adaptierten Farbwerte aus einem Referenzdruckprozess, die dort bunten Graufeldern entsprechen. Im Schritt S4 werden daher unter Zugrundelegung des Papierfarbweiß ($L^*_{ZW}a^*_{ZW}b^*_{ZW}$) des Zieldruckprozesses und des Papierweiß ($L^*_{RW}a^*_{RW}b^*_{RW}$) eines Referenzdruckprozesses vorgegebene erste Farbwerte ($L_1a_1b_1$) des Referenzdruckprozesses, die dort grauen Buntfeldern entsprechen, in zweite Farbwerte ($L_2a_2b_2$) des Zieldruckprozesses umgewandelt. Hierfür werden vorgeschaltet in einem Schritt S3 erste graue Farbwerte ($L_1a_1b_1$) des Referenzdruckprozesses sowie das Papierweiß ($L^*_{RW}a^*_{RW}b^*_{RW}$) des Referenzdruckprozesses ermittelt. Unter diesen grauen ersten Farbwerten ($L_1a_1b_1$) des Referenzdruckprozesses sind, wie gesagt, die Farbwerte von Grautönen des Referenzdruckprozesses gemeint, welche ausschließlich aus bunten Druckfarben ohne Schwarz aufgebaut sind. Diese ergeben sich im Schritt S3 durch die Vorgabe von Helligkeitswerten $L_1$ zu denen jeweils neutrale ab-Werte gemäß Formel (1) bestimmt werden.

Im Schritt S4 werden aus den ersten Farbwerten ($L_1a_1b_1$) und dem Papierweiß ($L^*_{RW}a^*_{RW}b^*_{RW}$) des Referenzdruckprozesses und dem Papierweiß ($L^*_{ZW}a^*_{ZW}b^*_{ZW}$) des Zieldruckprozesses gemäß den Formeln (2) die zweiten Farbwerte ($L_2a_2b_2$) des Zieldruckprozesses bestimmt.

Die im Schritt S5 ermittelten ersten Charakterisierungsdaten des Zieldruckprozesses und die im Schritt S4 ermittelten zweiten Farbwerte ($L_2a_2b_2$) des Zieldruckprozesses werden an den nächsten Schritt S6 übergeben, in welchem eine Bestimmung der Tonwerte der bunten Prozessfarben des Zieldruckprozesses erfolgt, die den zweiten Farbwerten ($L_2a_2b_2$) entsprechen. Auf diese Weise werden Tonwertekombinationen des Zieldruckprozesses ermittelt, welche der korrigierten Graubalance des Zieldruckprozesses entsprechen.

Um aus den Charakterisierungsdaten aus dem Schritt S5 die den zweiten Farbwerten ($L_2a_2b_2$) aus Schritt S4 zugeordneten Tonwerte zu ermitteln, ist ein iteratives Verfahren anzuwenden. Hierbei werden zuerst Tonwertekombinationen vorgegeben und aus den Charakterisierungsdaten bzw. alternativ aus einem hieraus erzeugten Profil Farbwerte im Lab-Raum berechnet. Aus der Differenz der so berechneten Farbwerte zu den zweiten Farbwerten ($L_2a_2b_2$) wird dann auf eine mögliche Anpassung zunächst eines Tonwertes geschlossen. Anschließend wird der nächste Tonwert variiert, erneut ein Farbwert bestimmt und die Richtung der Anpassung dieses Tonwertes bestimmt. Dieses wird iterativ für alle Tonwerte durchgeführt und insbesondere in weiteren Verfahrensschritten die Sprungweite für die Veränderung der Tonwerte reduziert, so dass abschließend ein möglichst genauer Wert der Tonwertekombination erreicht wird, der den vorgegebenen zweiten Farbwerten ($L_2a_2b_2$) entspricht. Auf diese Weise werden im Schritt S6 Tonwertekombinationen des Zieldruckprozesses ermittelt, die den zweiten Farbwerten ($L_2a_2b_2$) des Zieldruckprozesses und somit den bunten Grautönen ($L_1a_1b_1$) des Referenzdruckprozesses entsprechen. Im Schritt S7 werden aus diesen Tonwertekombinationen dann Korrekturen der gesamten Graubalance des Zieldruckprozesses vorgenommen. Dieses kann z. B. so erfolgen, dass die Graubalance für das Papierweiß vorgegebener Maßen bei einer Tonwertekombination bei (0/0/0) liegt und die Graubalance für den Schwarzwert ebenso vorgegeben bei (100/100/100). Die nun eingeführten Tonwertkombinationen aus dem Schritt S6 ergeben dann einen Verlauf der Tonwertekombinationen zwischen den beiden angegebenen Schranken. Durch ein Interpolationsverfahren können dann weitere bunte Grautöne auf einer entsprechenden Tonwertekurve ermittelt werden. Je mehr Buntgraufelder im Referenzdruckprozess zur Grauachse vorgegeben werden, desto genauer wird damit dann auch die Graubalancekorrektur im Schritt S7 für den Zieldruckprozess. Eine entsprechende Korrektur der rein schwarzen Grauwerte für K ist mit einem analogen Verfahren natürlich auch durchführbar.

Im Schritt S8 wird dann die so ermittelte Graubalancekorrektur aus Schritt S7 gemeinsam mit den Charakterisierungsdaten S5 verwendet, um ein Druckverfahren gemäß dem Zieldruckprozess zu kalibrieren und alternativ oder zusätzlich ein Profil 13 des Zieldruckverfahrens bzw. des Zieldruckprozesses zu erstellen bzw. zu korrigieren, welches auf die Kennlinien des Zieldruckprozesses und die Graubalance des Zieldruckprozesses Rücksicht nimmt.

Mittels dieser Korrektur kann dann in einem RIP 12 eine entsprechend Rasterung einer Druckvorlage durchgeführt werden und die Qualität von belichteten Druckplatten 3 gerade bezüglich der Graubalance wesentlich verbessert werden, ohne dass nach der Erstellung der Charakterisierungsdaten des Zieldruckprozesses ein erneuter Druck zur Ermittlung der Graubalancekorrektur notwendig wäre und zur Ermittlung der Graubalance kein großes Testelement notwendig wäre. Durch ein Testelement 15, 15' kann hierfür erfindungsgemäß jeweils auf gemessene spektrale Ist-Daten zurückgegriffen werden, die auch weiterhin zur Kalibrierung des Zieldruckprozesses zur Verfugung stehen.

**Bezugszeichenliste**

| | |
|---|---|
| 1 | Drucksystem |
| 2 | Plattenbelichter |
| 3 | Druckplatten |
| 4 | Druckwerke |
| 5 | Druckmaschine |
| 6 | Bogen |
| 7 | Bogenstapel |
| 8 | Anleger |
| 9 | Transportrichtung |
| 6 | Bogen |
| 11 | Druckvorlage |

| 12 | RIP |
|----|-----|
| 13 | Profil |
| 14 | Farbauszüge |
| 15, 15' | Testelement |
| 16 | Spektralphotometer |
| 17 | Erzeugungseinrichtung |
| 18 | Berechnungseinheit |
| 19 | gestrichelte Linien |
| 20 | Komplex |
| 21,22 | Teilbereiche |
| 21', 22' | Teilbereiche |
| 23 | Farbfelder |
| 24 | weiße Felder |
| 25 | gemischte Farbfelder |
| 26 | Volltonfarbfelder |
| 27 | Tonwertfarbfelder |
| 28 | Prozessdaten |
| 53, 58 | Speichereinrichtung |
| 54, 54' | Teilmengen gespeicherter Daten |
| 55 | Tonwertzunahmeberechnungseinrichtung |
| 56 | spektrale Berechnungseinrichtung |
| 57 | Tonwertzunahmekorrektureinrichtung |
| 59 | Berechnungseinrichtung |

| S1 | Schritt S1 - Bebilderung mit Testelement |
|----|------|
| S2 | Schritt S2 - Vermessung des Testelementes |
| S3 | Schritt S3 - Ermittlung der grauen Farbwerte des Referenzdruckprozesses |
| S4 | Schritt S4 - Bestimmung der zweiten Farbwerte |
| S5 | Schritt S5 - Ermittlung der Charakterisierungsdaten des Zieldruckprozesses |
| S6 | Schritt S6 - Ermittlung der Tonwerte-Kombination des Zieldruckprozesses |
| S7 | Schritt S7 - Korrektur der Graubalance |
| S8 | Schritt S8 - Zieldruckprozesskalibration |

**Patentansprüche**

1. Verfahren zur Graubalancekorrektur eines Zieldruckprozesses in einem Drucksystem, die folgenden Schritte umfassend:

   • Durchführung eines Referenzdruckprozesses zur Ermittlung von der Graubalance entsprechenden, ersten Farbwerten ($L_1a_1b_1$) für den Referenzdruckprozess
   • Bestimmung von ersten Charakterisierungsdaten des Zieldruckprozesses (S5) durch Auswertung der spektralen Ist-Daten (54, 54') eines gemäß Zieldruckprozessbedingungen gedruckten Testelementes (15, 15')
   • Ableitung von zweiten Farbwerten ($L_2a_2b_2$) für den Zieldruckprozess (S4) aus den ersten Farbwerten ($L_1a_1b_1$) des Referenzdruckprozesses, wobei jeweils Papierfarbwerte ($L*RWa*RWb*RW$), ($L*ZWa*ZWb*ZW$) für das Papierweiß des Referenz- und Zieldruckprozesses bestimmt werden, und die zweiten Farbwerte ($L2a2b2$) unter Berücksichtigung der Unterschiede der Papierweißwerte($L*RWa*RWb*RW$), ($L*ZWa*ZWb*ZW$) ermittelt werden
   • Ermittlung von neuen Tonwertekombinationen, die der korrigierten Graubalance des Zieldruckprozesses entsprechen, aus den zweiten Farbwerten ($L_2a_2b_2$) und den ersten Charakterisierungsdaten des Zieldruckprozesses (S6)
   • Korrektur der Graubalance des Zieldruckprozesses mit den ermittelten neuen Tonwertekombinationen (S7)
   • Kalibrierung eines Druckverfahrens gemäß dem Zieldruckprozess anhand der ermittelten Graubalancekorrektur (S8)

2. Verfahren nach Anspruch 1,
   wobei mit dem Zieldruckprozess wenigsten ein Testelement (15, 15') mit Messfeldern (23 - 27) auf einen Bedruckstoff (6) gedruckt wird, spektrale Ist-Daten (54, 54') erfasst werden, indem die Messfelder (23 - 27) spektral vermessen werden, und auf Grundlage der spektralen Ist-Daten (54, 54') die ersten Charakterisierungsdaten ermittelt werden, wobei weniger Messfelder (23 - 27) gedruckt werden, als erste Charakterisierungsdaten ermittelt werden und wenigstens die restlichen ersten Charakterisierungsdaten aus den spektralen Ist-Daten (54, 54') berechnet werden.

3. Verfahren nach Anspruch 2,
wobei zur Berechnung der ersten Charakterisierungsdaten ein Modell zur Berechnung von Farbwerten eines Druckprozesses verwendet wird, wobei wenigstens ein Parameter des Modells aus den spektralen Ist-Daten errechnet wird.

4. Verfahren nach Anspruch 1,
wobei eine Anzahl von ersten Farbwerten ($L_1a_1b_1$) an Farborten ermittelt werden, die einen vorgegebenen Abstand entlang der Helligkeitsachse (L) eines geräteunabhängigen Farbraums zueinander aufweisen, wobei insbesondere nur ein ausgewählter Helligkeitsbereich zur Ermittlung der Farbwerte ($L_1a_1b_1$)festgelegt werden kann.

5. Drucksystem (1), umfassend eine Druckmaschine (5) zur Bebilderung von Bedruckstoff (6) und eine Graubalancekorrektureinrichtung (20) zur Kalibrierung eines Zieldruckprozesses, wobei die Graubalancekorrektureinrichtung (20) aus einer Erzeugungseinrichtung (17) zur Erzeugung von ersten Charakterisierungsdaten des Zieldruckprozesses und einer Berechnungseinheit (18) zur Berechnung einer Graubalancekorrektur für das Zieldrucksystem (1) besteht, wobei die Graubalancekorrektureinrichtung (20) so eingerichtet ist, dass sie erste Charakterisierungsdaten des Zieldruckprozesses durch Auswertung der spektralen Ist-Daten (54, 54') eines gemäß Zieldruckprozessbedingungen gedruckten Testelementes (15, 15') bestimmt, auf Grundlage von vorgegebenen Prozessdaten (28) mit der Graubalance entsprechenden, ersten Farbwerten ($L_1a_1b_1$) eines Referenzdruckprozesses zweite Farbwerte ($L_2a_2b_2$) für den Zieldruckprozess aus den ersten Farbwerten ($L_1a_1b_1$) des Referenzdruckprozesses ableitet, wobei jeweils Papierfarbwerte (L*RWa*RWb*RW), (L*ZWa*ZWb*ZW) für das Papierweiß des Referenz- und Zieldruckprozesses bestimmt werden und die zweiten Farbwerte (L2a2b2) unter Berücksichtigung der Unterschiede der Papierweißwerte(L*RWa*RWb*RW), (L*ZWa*ZWb*ZW) ermittelt werden, neue Tonwertekombinationen, die der korrigierten Graubalance des Zieldruckprozesses entsprechen, aus den zweiten Farbwerten ($L_2a_2b_2$) und den ersten Charakterisierungsdaten des Zieldruckprozesses ermittelt, die Graubalance des Zieldruckprozesses mit den ermittelten neuen Tonwertekombinationen korrigiert und ein Druckverfahren gemäß dem Zieldruckprozess anhand der ermittelten Graubalancekorrektur kalibriert.

6. Drucksystem nach Anspruch 5, wobei eine spektrale Messeinrichtung (16) zur spektralen Vermessung von Messfeldern (23 - 27) eines Testelements (15, 15') zur Ermittlung von spektralen Ist-Daten (54, 54') und weiter ein Umrechnungsorgan (56) zur Berechnung der ersten Charakterisierungsdaten aus den spektralen Ist-Daten (54, 54') vorhanden ist.

7. Computerprogrammprodukt, welches ein Drucksystem nach einem der Ansprüche 5 bis 6 einrichtet.

8. Computerlesbares Speichermittel auf dem das Computerprogrammprodukt nach Anspruch 7 gespeichert ist.

**Claims**

1. Method for grey balance correction of a target printing process in a printing system, the method comprising the following steps:

   • carrying out a reference printing process to determine first reference printing process color values ($L_1a_1b_1$) corresponding to the grey balance,
   • determining first characterization data of the target printing process (S5) by analyzing the spectral actual data (54, 54') of a test element (15, 15') printed in accordance with target printing process conditions,
   • deriving second colour values ($L_2a_2b_2$) for the target printing process (S4) from the first colour values ($L_1a_1b_1$), wherein respective paper colour values (L*RWa*RWb*RW), (L*ZWa*ZWb*ZW) for the paper white of the reference and target printing processes are determined and the second colour values ($L_2a_2b_2$) are determined under consideration of the differences of the paper white values (L*RWa*RWb*RW), (L*ZWa*ZWb*ZW),
   • determining new tonal value combinations that correspond to the corrected grey balance of the target printing process from the second colour values ($L_2a_2b_2$) and the first characterization data of the target printing process (S6),
   • correcting the grey balance of the target printing process using the determined new tonal value combinations (S7),
• calibrating a printing operation in accordance with the target printing process based on the determined grey balance correction (S8).

2. Method according to claim 1,
wherein at least one test element (15, 15') having measuring areas (23-27) is printed onto on a printing material using the target printing process,
actual spectral data (54, 54') is determined by spectrally measuring the measuring areas (23-27), and the first characterization data are determined on the basis of the actual spectral data (54, 54'),
and wherein fewer measuring areas (23-27) are printed than first characterization data are determined and at least the remaining first characterization data are calculated from the actual spectral data.

3. Method according to claim 2,
wherein to calculate the first characterization data, a model to calculate color values of a printing process is used, wherein at least one parameter of the model is calculated from the actual spectral data.

4. Method according to claim 1,
wherein a number of first color values ($L_1a_1b_1$) are determined at color locations that are at a predefined distance from one another along the lightness axis (L) of a device-independent color space, wherein in particular only one selected lightness region may be defined for determining the color values ($L_1,a_1,b_1$).

5. Printing system (1) comprising a printing machine (5) for imaging printing material (6) and a grey balance correction device (20) for calibrating a target printing process, wherein the grey balance correction device (20) consists of a generating device (17) for generating first characterization data of the target printing process and of a calculation unit (18) for calculating a grey balance correction for the target printing system (1), wherein the grey balance correction device (20) is designed to

determine first characterization data of the target printing process by evaluating the actual spectral data (54, 54') of a test element (15, 15') printed in accordance with target printing process conditions,
derive, on the basis of predetermined process data (28) with first color values (L1a1b1) of a reference printing process corresponding to the grey balance, second colour values (L2a2b2) for the target printing process from the first colour values (L1a1b1) of the reference printing process,
wherein respective paper colour values (L*RWa*RWb*RW), (L*ZWa*ZWb*ZW) for the paper white of the reference and target printing processes are determined and the second colour values (L2a2b2) are determined under consideration of the differences of the paper white values (L*RWa*RWb*RW), (L*ZWa*ZWb*ZW),
determine new tonal value combinations that correspond to the corrected grey balance of the target printing process from the second colour values (L2a2b2) and the first characterization data of the target printing process,

correct the grey balance of the target printing process using the determined new tonal value combinations, and calibrates a printing process in accordance with the target printing process based on the determined grey balance correction.

6. Printing system according to claim 5,
wherein a spectral measuring device (16) for spectral measurement of measuring areas (23-17) of a test element (15, 15') for determining actual spectral data (54, 54') and a conversion element (56) for calculating the first characterization data from the actual spectral data (54, 54') are provided.

7. Computer program product that sets up a printing system according to any one of claims 5 to 6.

8. Computer-readable storage element on which the computer program product according to claim 7 is saved.

**Revendications**

1. Procédé de correction de la balance des gris d'un processus d'impression cible dans un système d'impression, comprenant les étapes suivantes :

• Exécution d'un processus d'impression de référence pour la détermination de premières valeurs d'encrage

($L_1a_1b_1$) correspondant à la balance des gris pour le processus d'impression de référence

• Détermination de premières données de caractérisation du processus d'impression cible (S5) par analyse des valeurs spectrales actuelles (54, 54') d'un élément test (15, 15') imprimé conformément aux conditions de processus d'impression cible.

• Dérivation de deuxièmes valeurs de couleur ($L_2a_2b_2$) pour le processus d'impression cible (S4) à partir des premières valeurs de couleur ($L_1a_1b_1$) du processus d'impression de référence, des valeurs de couleur du papier (L*RWa*RWb*RW), (L*ZWa*ZWb*ZW) pour le blanc de papier du processus d'impression de référence et cible et les deuxièmes valeurs de couleur (L2a2b2) étant respectivement déterminées en tenant compte des différences des valeurs de blanc de papier (L*RWa*RWb*RW), (L*ZWa*ZWb*ZW)

• Détermination de nouvelles combinaisons de tonalités, correspondant à la balance des gris corrigée du processus d'impression cible, à partir des deuxièmes valeurs de couleur ($L_2a_2b_2$) et des premières données de caractérisation du processus d'impression cible (S6)

• Correction de la balance des gris du processus d'impression cible avec les nouvelles combinaisons de tonalités (S7) déterminées

• Calibrage d'un procédé d'impression conforme au processus d'impression cible à l'aide de la correction de la balance des gris (S8) déterminée

2. Procédé selon la revendication 1,
selon lequel au moins un élément test (15, 15') avec champs de mesure (23 - 27) est imprimé sur un support d'impression (6) avec le processus d'impression cible, pour lequel les valeurs spectrales actuelles (54, 54') sont enregistrées en procédant à la mesure spectrale des champs de mesure (23 - 27) et les premières données de caractérisation sont définies sur la base des valeurs spectrales actuelles (54, 54'), moins de champs de mesure (23 - 27) étant imprimés qu'il n'est déterminé de premières données de caractérisation, et au moins les premières données de caractérisation restantes étant calculées à partir des valeurs spectrales actuelles (54, 54').

3. Procédé selon la revendication 2,
selon lequel, pour le calcul des premières données de caractérisation, un modèle de calcul des valeurs de couleur d'un processus d'impression est utilisé, au moins un paramètre du modèle étant calculé à partir des valeurs spectrales actuelles.

4. Procédé selon la revendication 1,
selon lequel un nombre de premières valeurs de couleur ($L_1a_1b_1$) sont déterminées sur des lieux de couleur, présentant réciproquement une distance prédéfinie le long de l'axe de luminosité (L) d'un espace chromatique indépendant de l'appareil, pour lequel en particulier uniquement une zone de luminosité sélectionnée peut être définie pour la détermination des valeurs de couleur ($L_1a_1b_1$).

5. Système d'impression (1), comprenant une machine à imprimer (5) pour la gravure d'un support d'impression (6) et un dispositif de correction de la balance des gris (20) pour le calibrage d'un processus d'impression cible, selon lequel le dispositif de correction de la balance des gris (20) se compose d'un moyen de génération (17) pour la génération de premières données de caractérisation du processus d'impression cible et d'une unité de calcul (18) pour le calcul d'une correction de balance des gris pour le système d'impression cible (1), le dispositif de correction de la balance des gris (20) étant ajusté de sorte à déterminer de premières données de caractérisation du processus d'impression cible par évaluation des valeurs spectrales actuelles (54, 54') d'un élément test (15, 15') imprimé conformément aux conditions du processus d'impression cible, dérivant sur la base de données de processus (28) prédéfinies, avec de premières valeurs de couleur ($L_1a_1b_1$) correspondant à la balance des gris d'un processus d'impression de référence, de deuxièmes valeurs de couleur ($L_2a_2b_2$) pour le processus d'impression cible à partir des premières valeurs de couleur ($L_1a_1b_1$) du processus d'impression de référence, selon lequel des valeurs de couleur de papier (L*RWa*RWb*RW), (L*ZWa*ZWb*ZW) sont respectivement déterminées pour le blanc de papier des processus d'impression de référence et cible et les deuxièmes valeurs de couleur (L2a2b2) sont définies en tenant compte des différences de valeurs de blanc de papier (L*RWa*RWb*RW), (L*ZWa*ZWb*ZW), de nouvelles combinaisons de tonalités correspondant à la balance corrigée des gris du processus d'impression cible étant déterminées à partir des deuxièmes valeurs de couleur ($L_2a_2b_2$) et des premières données de caractérisation du processus d'impression cible, la balance des gris du processus d'impression cible étant corrigée avec les nouvelles combinaisons de tonalités déterminées et un procédé d'impression conforme au processus d'impression cible étant calibré à l'aide de la correction de la balance des gris déterminée.

6. Système d'impression selon la revendication 5,
pour lequel

il existe un dispositif de mesure spectrale (16) pour la mesure spectrale de champs de mesure (23 - 27) d'un élément test (15, 15') pour la détermination de valeurs spectrales actuelles (54,54') ainsi qu'un organe de conversion (56) pour le calcul des premières données de caractérisation issues des valeurs spectrales actuelles (54,54').

7. Produit programme informatique qui ajuste un système d'impression selon l'une des revendications 5 à 6.

8. Moyen de mémorisation lisible sur ordinateur, sur lequel le produit programme informatique selon la revendication 7 est enregistré.

Fig.1

EP 2 506 559 B1

21

26   21   27   26   22   26   27   25   27   15

24   24   27   25

23   27   26

Fig.2

EP 2 506 559 B1

21'   27   24   22'   15'

26   25

Fig.3

EP 2 506 559 B1

Fig.4

Fig.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10226563 A1
- EP 1279502 B1
- DE 102008031735 A1
- US 20100110461 A1
- US 20060197966 A1
- DE 1020024001937

### In der Beschreibung aufgeführte Nicht-Patentliteratur

- Optimization of the spectral Neugebauer model for printer characterization. *Journal of Electronic Imaging,* April 1999, vol. 8 (2), 156-166